(19) Europäisches Patentamt
European Patent Office
Office européen des brevets

(11) **EP 4 063 900 B1**

(12) **EUROPÄISCHE PATENTSCHRIFT**

(45) Veröffentlichungstag und Bekanntmachung des Hinweises auf die Patenterteilung:
**13.05.2026 Patentblatt 2026/20**

(21) Anmeldenummer: **21164899.3**

(22) Anmeldetag: **25.03.2021**

(51) Internationale Patentklassifikation (IPC):
**G01S 7/481** *(2006.01)* **G01S 17/89** *(2020.01)*

(52) Gemeinsame Patentklassifikation (CPC):
**G01S 7/4812; G01S 7/4817; G01S 17/89**

(54) **VORRICHTUNG ZUR VERMESSUNG EINER UMGEBUNG**

DEVICE FOR MEASURING AN ENVIRONMENT

DISPOSITIF DE MESURE D'UN ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.09.2022 Patentblatt 2022/39**

(73) Patentinhaber: **RIEGL Laser Measurement Systems GmbH**
**3580 Horn (AT)**

(72) Erfinder: **RIEGER, Peter**
**3824 Grossau (AT)**

(74) Vertreter: **Weiser Voith Gugler Patentanwälte Partnerschaft Kopfgasse 7 1130 Wien (AT)**

(56) Entgegenhaltungen:
**DE-A1- 102004 050 682 US-A1- 2019 107 623**

**Beschreibung**

Die vorliegende Erfindung betrifft eine Vorrichtung zur Vermessung einer gegenüber der Vorrichtung in einer Bewegungsrichtung mit einer Relativgeschwindigkeit relativbewegten Umgebung durch Laufzeitmessung von daran reflektierten Laserstrahlen in einem Koordinatensystem, umfassend eine erste Scaneinheit zum Aussenden eines ersten Laserstrahls über eine erste Folge von Ablenkperioden mit einer jeweiligen Ablenkperiodendauer, welcher erste Laserstrahl in jeder Ablenkperiode einen ersten Scanfächer durchläuft und die Umgebung entlang einer ersten zur Bewegungsrichtung nicht-parallelen Scanzeile abtastet, wobei die ersten Scanzeilen eine erste Scanzeilenschar bilden, und zum Empfangen der zugehörigen von der Umgebung reflektierten Laserstrahls.

Vorrichtungen dieser Art sind z.B. in der EP 3 182 159 B1 beschrieben und werden beispielsweise von einem Flugzeug oder Schiff mitgeführt, um Umgebungen wie den Erdboden oder Meeresgrund topographisch zu vermessen. Es ist auch möglich, eine solche Vorrichtung auf einem Landfahrzeug zu montieren, um z.B. Hausfassaden, Straßenschluchten oder Tunnel im Vorbeifahren zu vermessen. Die Vorrichtung kann auch stationär aufgestellt werden, beispielsweise über einem Förderband, um darauf bewegte Objekte zu vermessen, usw.

Von der Scaneinheit wird dabei ein z.B. gepulster oder modulierter Laserstrahl pro Ablenkperiode der Folge unter verschiedensten Aussendewinkeln innerhalb des Scanfächers auf viele Zielpunkte ("Abtastpunkte") der Scanzeile in der Umgebung ausgesandt, und aus Laufzeitmessungen der Zielreflexionen werden die Zielentfernungen und daraus - in Kenntnis der Lage der Scaneinheit und des jeweiligen Aussendewinkels - ein Punktemodell ("3D-Punktwolke") der Umgebung erstellt. Bei mobilen, fahrzeuggestützten Vorrichtungen wird dabei der vom Laserstrahl aufgespannte Scanfächer durch die Fortbewegung des Fahrzeugs über die Umgebung geführt, um diese Scanzeile für Scanzeile abzutasten. Bei stationären Vorrichtungen wird die zu vermessende Umgebung gegenüber dem Scanfächer relativbewegt, z.B. zur Vermessung von Gegenständen auf Förderbändern.

Dabei ist eine möglichst rasche und örtlich hoch auflösende Erstellung der 3D-Punktwolke wünschenswert. Der Auflösung der Punktwolke sind jedoch Grenzen gesetzt. Einerseits kann z.B. aufgrund der Massenträgheit eines Ablenkmechanismus der Scaneinheit die Ablenkperiodendauer nicht beliebig verkürzt werden, weshalb bei gegebener Relativgeschwindigkeit dem Abstand zwischen zwei in der Scanzeilenschar aufeinanderfolgenden Scanzeilen, der "Schrittweite", Grenzen gesetzt sind. Andererseits fallen bei kürzerer Ablenkperiodendauer bei konstanter Impulswiederholrate der Laserimpulse weniger Abtastpunkte in eine Ablenkperiode, was die Auflösung innerhalb einer Scanzeile und damit die Auflösung der 3D-Punktwolke verringert. Auch die Impulswiederholrate kann nicht beliebig erhöht werden: Bei hoher Impulswiederholrate oder größerer Zielentfernung wird beispielsweise schon der nächste Laserimpuls ausgesandt, noch bevor der reflektierte erste Sendeimpuls empfangen wird, sodass die eintreffenden Empfangsimpulse nicht mehr eindeutig ihrem jeweiligen Sendeimpuls zugeordnet werden können. Dies ist als "multiple time around"- (MTA-)-Problem bekannt. Die maximale Größe $d_{max}$ eines eindeutig vermessbaren Entfernungsbereiches, einer sog. MTA-Zone, ergibt sich dabei aus der Impulswiederholrate (pulse repetition rate) PRR und der Lichtgeschwindigkeit c zu $d_{max} = c/(2 \cdot PRR)$.

Zusätzlich treten an den Rändern jeder MTA-Zone konstruktionsbedingt sogenannte "blind ranges" auf, weil die Empfangselektronik durch Nahreflexionen eines ausgesandten Laserimpulses an z.B. Gehäuse- oder Montageteilen der Vorrichtung gesättigt bzw. überlastet und damit "blind" für den Empfang eines reflektierten Laserimpulses ist. Möglichst große MTA-Zonen sind daher erstrebenswert, um die Anzahl der "blind ranges" über den gesamten zu vermessenden Entfernungsbereich zu minimieren. Dies begrenzt aber wiederum die Impulswiederholrate und folglich die Anzahl von Abtastpunkten und damit die Auflösung der 3D-Punktwolke.

Eine bloße Erhöhung der Abtastpunkte in der 3D-Punktwolke, wie in der DE 10 2004 050 682 A1 durch Verwenden mehrerer Scaneinheiten erreicht, erhöht aber noch nicht notwendigerweise auch deren Ortsauflösung. So könnten z.B. manche Zielpunkte mehrfach abgetastet werden, **d.h.** sich lokale Cluster von Abtastpunkten bilden, und andere Bereiche der Umgebung zu wenig Abtastpunkte enthalten, sodass die gewünschte Auflösung der 3D-Punktwolke nicht über die gesamte Umgebung vorliegt. Eine möglichst gleichmäßige Verteilung der Abtastpunkte über die Umgebung ist daher wesentlich, um eine hochwertige 3D-Punktwolke zu erzielen.

Die Erfindung setzt sich zum Ziel, eine Vorrichtung zum Laserscannen zu schaffen, welche eine besonders rasche und aussagekräftige Erstellung einer 3D-Punktwolke der Umgebung ermöglicht.

Dieses Ziel wird mit einer Vorrichtung der einleitend genannten Art erreicht, umfassend zumindest eine weitere Scaneinheit zum Aussenden eines weiteren Laserstrahls über eine weitere Folge von Ablenkperioden mit derselben jeweiligen Ablenkperiodendauer, welcher weitere Laserstrahl in jeder Ablenkperiode einen weiteren Scanfächer durchläuft und die Umgebung entlang einer weiteren zur Bewegungsrichtung nicht-parallelen Scanzeile abtastet, wobei die weiteren Scanzeilen eine weitere Scanzeilenschar bilden, und zum Empfangen des zugehörigen von der Umgebung reflektierten Laserstrahls, wobei sich alle Scanfächer in Bewegungsrichtung gesehen im Wesentlichen überlappen und die Scharrichtungen aller Scanzeilenscharen von der Vorrichtung aus gesehen im Wesentlichen parallel sind, wobei die Vorrichtung dazu ausgebildet ist, mittels der ersten Scaneinheit und der zumindest einen weiteren Scaneinheit gleichzeitig zwei oder mehr Scanfächer auszusenden, und eine an die zumindest eine weitere Scaneinheit angeschlossene Steuereinrichtung aufweist, welche dazu ausgebildet ist, die Scanzeilenschar jeder weiteren Scaneinheit gegenüber der Scanzeilenschar einer in einer vorgegebenen Reihung der Scaneinheiten jeweils benachbarten Scaneinheit in Bewegungsrichtung um einen von der Relativgeschwindigkeit und der Ablenkperiodendauer abhängigen Ortsversatz so zu versetzen, dass die genannten weiteren Scanzeilen nicht mit den genannten ersten Scanzeilen zusammenfallen.

Die Laserscanvorrichtung der Erfindung kann durch ihre Vielzahl an Scaneinheiten gleichzeitig zwei oder mehr Scanfächer aussenden, wodurch in derselben Zeit zumindest doppelt so viele Abtastpunkte der Umgebung für die Punktwolke erstellt werden können. Durch die Relativbewegung zwischen Vorrichtung und Umgebung kann im Überlappungsbereich der Scanfächer ein von einem in Bewegungsrichtung gesehen vorderen Scanfächer bereits gescannter Bereich der Umgebung von einem in dieser Bewegungsrichtung gesehen hinteren Scanfächer erneut überstrichen und gescannt werden.

Unter dem Begriff "Scharrichtung" wird eine von der Vorrichtung aus gesehen auf alle Scanzeilen der jeweiligen Scanzeilenschar normale Richtung verstanden. Von der Vorrichtung aus gesehen parallele Scharrichtungen aller Scaneinheiten führen zu von der Vorrichtung aus gesehen parallelen Scanzeilen unterschiedlicher Scanzeilenscharen. Das erfindungsgemäße Versetzen von parallelen Scanzeilenscharen in Bewegungsrichtung verhindert, dass der Laserstrahl des hinteren Scanfächers die vom vorderen Scanfächer bereits gescannten Abtastpunkte des Bereichs unter Umständen erneut trifft, d.h. die Scanzeilen der vorderen und hinteren Scanfächer zusammenfallen. Dies garantiert, dass die Umgebung tatsächlich mit einer höheren Auflösung vermessen wird.

Relativgeschwindigkeit und Ablenkperiodendauer können für eine spezifische Vermessungsaufgabe fix vorgegeben sein oder sich während der Vermessung ändern. Dabei ermöglicht die erfindungsgemäße Abhängigkeit des Ortsversatzes von der Relativgeschwindigkeit und der Ablenkperiodendauer der Steuereinrichtung einen automatisch daran angepassten Betrieb. Die Steuereinrichtung kann diese Werte z.B. selbst messen oder von einer Messeinheit oder einem Stellwertgeber empfangen, mit dem der Messtechniker diese Werte im Betrieb einstellt.

Nicht zuletzt empfängt jede Scaneinheit nur den von der Umgebung reflektierten eigenen Laserstrahl, wodurch die von unterschiedlichen Scaneinheiten ausgesandten Laserstrahlen empfängerseitig geometrisch getrennt sind. Dies erlaubt es beispielsweise, die Anzahl an verarbeiteten Laserimpulsen pro Zeit entsprechend der Anzahl an Scaneinheiten zu vervielfachen, ohne dabei die MTA-Zonen zu verkleinern.

Im Ergebnis erzielt die Vorrichtung der Erfindung eine besonders rasche, hochwertige und aussagekräftige Vermessung der Umgebung.

Wie bereits kurz erörtert besteht eine bevorzugte Anwendungsform der Vorrichtung der Erfindung darin, dass sie auf einem Fahrzeug, bevorzugt auf einem Luftfahrzeug, montiert ist. Dadurch können großflächige Umgebungen wie ganze Landschaften schnell und flexibel, z.B. von einem Hubschrauber, einer Drohne, einem Flugzeug usw. aus, vermessen werden.

In einer bevorzugten Ausführungsform ist die Steuereinrichtung dazu ausgebildet, die Ablenkperiodendauer und/oder die Relativgeschwindigkeit abhängig von zumindest einem vergangenen Entfernungsmesswert der Umgebung vorzugeben. Dies erlaubt es, die Scanzeilen-Schrittweite jeder Scaneinheit und/oder die Abtastpunktabstände innerhalb jeder Scanzeile zu vergleichmäßigen. Beispielsweise könnte die Vorrichtung auf einem Flugzeug montiert sein und die Steuereinrichtung die Ablenkperiodendauer und die Relativgeschwindigkeit flughöhenabhängig so vorgeben, dass eine größere Flughöhe mit längeren Ablenkperioden und geringerer Relativgeschwindigkeit und eine kleinere Flughöhe mit kürzeren Ablenkperioden und höherer Relativgeschwindigkeit einhergeht, um bei konstanter Impulswiederholrate über die ganze zu vermessende Umgebung möglichst dieselben Abtastpunktabstände innerhalb der Scanfächer und dieselben Scanzeilenabstände zu erreichen.

Besonders vorteilhaft ist es, wenn die Steuereinrichtung dazu ausgebildet ist, die Scanzeilenschar jeder weiteren Scaneinheit gegenüber der Scanzeilenschar einer in einer vorgegebenen Reihung der Scaneinheiten jeweils benachbarten Scaneinheit so zu versetzen, dass die Scanzeilen in Bewegungsrichtung in regelmäßigen Abständen angeordnet sind. Die regelmäßigen Abstände aller Scanzeilen können z.B. von der Vorrichtung aus gesehen in einer Draufsicht der Umgebung, in einer vorgegebenen Tangentialebene an die Umgebung oder - insbesondere unter Verwendung vergangener Entfernungsmesswerte - in abgetasteten Oberflächen der Umgebung selbst vorliegen. Durch diese regelmäßige Anordnung der Scanzeilen kann ein allfälliges Zusammenfallen der Abtastpunkte unterschiedlicher Scanfächer in der Umgebung verhindert und dadurch die Auflösung der 3D-Punktwolke erhöht werden.

Insbesondere ist es dazu günstig, wenn der Ortsversatz zwischen den Scanzeilenscharen je zweier in der Reihung einander benachbarter Scaneinheiten, vermehrt um eine in Bewegungsrichtung liegende, ohne diesen Ortsversatz durch die Relativbewegung verursachte Verschiebung zwischen diesen zwei Scanzeilenscharen, dem in Bewegungsrichtung liegenden Abstand zwischen zwei aufeinanderfolgenden Scanzeilen einer Scaneinheit in Bewegungsrichtung, dividiert durch die Anzahl aller Scaneinheiten, entspricht.

Beispielsweise könnte für eine regelmäßige Anordnung der Scanzeilen der Ortsversatz zwischen den Scanzeilenscharen je zweier in der Reihung einander benachbarter Scaneinheiten gewählt sein als

$$\Delta S_{k,k-1} = \frac{v \cdot T_{AP}}{K} - \left[ D_{k,k-1} + h \cdot (\tan \alpha_k - \tan \alpha_{k-1}) \right] \bmod (v \cdot T_{AP}) \qquad (1)$$

mit

| | |
|---|---|
| K | Anzahl der Scaneinheiten, |
| $\Delta S_{k,k-1}$ | Ortsversatz der k-ten Scanzeilenschar gegenüber der (k-1)-ten Scanzeilenschar, |
| v | Relativgeschwindigkeit, |
| $T_{AP}$ | Ablenkperiodendauer, |
| $D_{k,k-1}$ | Distanz zwischen Scheitelpunkten der k-ten und (k-1)-ten Scanfächer entlang der Bewegungsrichtung, |
| h | erwarteter Normalabstand zwischen Vorrichtung und Umgebung, |
| $\alpha_k$ | Winkel von einer erwarteten Normalen auf die Umgebung zum k-ten Scanfächer in einer von der Bewegungsrichtung und der erwarteten Normalen aufgespannten Ebene und |
| mod | Modulo-Operator. |

In einer besonders bevorzugten Ausführungsform sind alle Scanfächer im Wesentlichen parallel. Dadurch kann der zur Vergleichmäßigung der Scanzeilen erforderliche Ortsversatz unabhängig von der Umgebungs-Topographie und damit besonders einfach bestimmt werden. Überdies ermöglicht die Verwendung paralleler Scanfächer eine Maximierung des Überlappungsbereichs der Scanfächer und damit der Breite des Scanstreifens, in dem die Umgebung in der verbesserten Auflösung gescannt werden kann. Zum Beispiel können dadurch ein Ermitteln der oben genannten Tangentialebene an die Umgebung und dieses Ermitteln ausführende Hard- oder Softwareelemente entfallen.

Insbesondere kann bei im Wesentlichen parallelen Scanfächern der Ortsversatz zwischen den Scanzeilenscharen je zweier in der Reihung einander benachbarter Scaneinheiten gewählt werden als

$$\Delta S_{k,k-1} = \frac{v \cdot T_{AP}}{K} - D_{k,k-1} \bmod (v \cdot T_{AP}) \qquad (2)$$

mit

| | |
|---|---|
| K | Anzahl der Scaneinheiten, |
| $\Delta S_{k,k-1}$ | Ortsversatz der k-ten Scanzeilenschar gegenüber der (k-1)-ten Scanzeilenschar, |
| v | Relativgeschwindigkeit, |
| $T_{AP}$ | Ablenkperiodendauer, |
| $D_{k,k-1}$ | Distanz zwischen dem k-ten und (k-1)-ten Scanfächer entlang der Bewegungsrichtung und |
| mod | Modulo-Operator. |

Wie aus Gleichung (2) ersichtlich gehen in die Bestimmung des Ortsversatzes mit der Ablenkperiodendauer, der Relativgeschwindigkeit und der Anzahl an Scanfächern bzw. Scaneinheiten nur von der Umgebung unabhängige Werte ein, was den Aufwand für die Bestimmung des Ortsversatzes wesentlich vereinfacht.

In einer bevorzugten Ausführungsform wird der Ortsversatz der Scanzeilenschar/en auf optischem Wege erreicht, indem die Steuereinrichtung dazu ausgebildet ist, die Scanzeilenschar der genannten zumindest einen weiteren Scaneinheit durch Steuern optischer Elemente im Strahlengang ihres Laserstrahles zu versetzen. Das Verwenden gesteuerter optischer Elemente, z.B. e-lektrooptischer Elemente, schwenk- oder drehbarer Spiegel, Prismen usw., im Strahlengang erlaubt es, den zugehörigen Scanfächer in Bewegungsrichtung zu verschieben und/oder zu verschwenken, um die zugehörige Scanzeilenschar zu versetzen.

In dieser Ausführungsform kann ein zeitliches Gegeneinander-Verschieben der Ablenkperioden unterschiedlicher Scaneinheiten erfolgen, indem die Steuereinrichtung dazu ausgebildet ist, die Scanzeilenschar der genannten zumindest einen weiteren Scaneinheit durch Steuern eines zeitlichen Versatzes der jeweiligen Folge zu versetzen. Dadurch können ohnehin vorhandene Schwing- oder Drehspiegel der Scaneinheit z.B. durch Verzögerungsglieder zeitversetzt angesteuert oder durch Aktuatoren phasenversetzt und somit zugleich für die Erzeugung als auch das Versetzen der Scanzeilen verwendet werden.

Die Scaneinheiten der Vorrichtung können zur Laserstrahlablenkung z.B. mit Schwingspiegel-, Drehspiegel-, Palmerscannern od.dgl. aufgebaut sein. In einem besonders bevorzugten Vorrichtungsaufbau umfasst jede Scaneinheit eine Ablenkeinrichtung mit einem um seine Prismenachse drehbaren Spiegelprisma, dessen Mantelseiten jeweils eine Spiegelfläche bilden, und einen Lasersender zum Aussenden des jeweiligen Laserstrahls in einer jeweiligen Senderichtung auf die Ablenkeinrichtung. Mit einem solchen rotierenden Spiegelprisma kann eine konstante Winkelgeschwindigkeit innerhalb jeder Ablenkperiode beim Abschreiten des Scanfächers und ein anschließendes Rückspringen an den Anfang des Scanfächers in der nächsten Ablenkperiode erreicht werden, d.h. ein zeilenweises Abtasten der Umgebung mit hoher Geschwindigkeit und konstanten Aussendewinkel-Abständen innerhalb einer Scanzeile. Wenn dabei die Ablenkeinrichtungen aller Scaneinheiten durch ein und dieselbe Ablenkeinrichtung gebildet sind, ergibt sich ein besonders kompakter Aufbau der Scaneinheiten und gesonderte Antriebe für jedes Spiegelprisma können entfallen. Zusätzlich können so die Senderichtungen unterschiedlicher Lasersender durch Referenzierung auf das eine gemeinsame Spiegelprisma besonders einfach aufeinander abgestimmt werden. Außerdem führt ein einziges Spiegelprisma konstruktionsbedingt zur selben Ablenkperiodendauer für alle Scaneinheiten, so dass diese nicht gesondert synchronisiert werden müssen.

In dem genannten bevorzugten Vorrichtungsaufbau der Erfindung können insbesondere drei vorteilhafte - optional auch miteinander kombinierbare - Varianten für das Versetzen der Scanzeilen vorgesehen werden.

In einer ersten Variante weist der Lasersender einen im Strahlengang des Laserstrahls liegenden verstellbaren Umlenkspiegel auf und die Steuereinrichtung ist dazu ausgebildet, die Scanzeilenschar der genannten zumindest einen weiteren Scaneinheit durch Verstellen des zugehörigen Umlenkspiegels zu versetzen. Der Umlenkspiegel definiert durch seine Lage die jeweilige Senderichtung und kann z.B. von einem mit der Steuereinrichtung verbundenen Aktuator verstellt werden. Ein leichter Umlenkspiegel kann aufgrund seiner geringen Massenträgheit besonders schnell verstellt, z.B. verschwenkt oder verschoben, werden, sodass eine z.B. aufgrund einer Änderung der Ablenkperiodendauer oder der Relativgeschwindigkeit notwendige Änderung des Ortsversatzes schnell ausgeführt werden kann. Außerdem kann ein Umlenkspiegel über einen großen Winkelbereich verstellt werden und damit auch große Änderungen der Senderichtung und des Ortsversatzes erwirken.

In einer zweiten Variante ist der Lasersender gegenüber der Ablenkeinrichtung verstellbar gelagert und die Steuereinrichtung dazu ausgebildet, die Scanzeilenschar der genannten zumindest einen weiteren Scaneinheit durch Steuern der Lage des zugehörigen Lasersenders zu versetzen. In dieser Variante werden die Lasersender von mit der Steuereinrichtung verbundenen Aktuatoren verstellt, z.B. verschwenkt oder verschoben, sodass auch ohne Umlenkspiegel große Ortsversätze erzielt werden können.

In der ersten und der zweiten Variante könnte zum Empfangen der Laserimpulse verschwenkter oder verschobener Scanfächer die Empfangsapertur des Laserempfängers jeder weiteren Scaneinheit so vergrößert werden, dass die reflektierten Laserimpulse auch des verschwenkten bzw. verschobenen zugehörigen Scanfächers noch innerhalb dieser Empfangsapertur liegen. Alternativ dazu können die Laserempfänger der weiteren Scaneinheiten ihre Empfangsapertur beibehalten, wenn die Blickrichtung der Laserempfänger gleichsam mit dem zugehörigen Scanfächer mitverschwenkt bzw. -verschoben wird, z.B. indem die Steuereinrichtung verstellbare optische Elemente im Strahlengang der reflektierten Laserimpulse hat oder die Lage der Laserempfänger selbst steuert.

In einer dritten Variante ist die Steuereinrichtung dazu ausgebildet, die Scanzeilenschar der genannten zumindest einen weiteren Scaneinheit durch Steuern der Phasenlage der Drehbewegung des zugehörigen Spiegelprismas zu versetzen. Dadurch können die ohnehin vorhandenen Spiegelprismen - z.B. durch entsprechendes Ansteuern ihrer Drehachsen-Antriebe - gleich zum Scanzeilen-Versetzen mitverwendet werden und zusätzliche optische Elemente entfallen.

Insbesondere kann in der dritten Variante bei im Wesentlichen parallelen Scanfächern die regelmäßige Anordnung der Scanzeilen aller Scaneinheiten dadurch bewerkstelligt werden, dass die Phasenlage zwischen den Drehbewegungen der Spiegelprismen je zweier in der Reihung einander benachbarter Scaneinheiten gewählt wird als

$$\Delta\varphi_{k,k-1} = \frac{360°}{K \cdot J} - D_{k,k-1} \cdot \frac{360°}{J \cdot v \cdot T_{AP}} \qquad (3)$$

mit

K          Anzahl der Scaneinheiten,
J          Anzahl der Spiegelflächen,
$\Delta\varphi_{k,k-1}$   Phasenlage des Spiegelprismas der k-ten Scaneinheit gegenüber dem Spiegelprisma der (k-1)-ten Scaneinheit,
v          Relativgeschwindigkeit,
$T_{AP}$   Ablenkperiodendauer,
$D_{k,k-1}$   Distanz zwischen dem k-ten und (k-1)-ten Scanfächer entlang der Bewegungsrichtung und
mod          Modulo-Operator.

Wie aus Gleichung (3) ersichtlich, fließen dabei in die Bestimmung der Phasenlage lediglich die Ablenkgeschwindigkeit, die Anzahl der Scaneinheiten und deren Spiegelflächen ein, sodass der Ortsversatz von der Topographie der zu vermessenden Umgebung unabhängig ist.

**EP 4 063 900 B1**

Die Erfindung wird nachstehend anhand von in den beigeschlossenen Zeichnungen dargestellten Ausführungsbeispielen näher erläutert. In den Zeichnungen zeigen:

Fig. 1 eine auf einem Luftfahrzeug montierte Laserscanvorrichtung und eine ihrer Scaneinheiten beim Aussenden ihres Scanfächers zur Vermessung einer Umgebung in einer schematischen Perspektivansicht;

Fig. 2 einen Sende- und Empfangskanal der Vorrichtung von Fig. 1 in einem Blockschaltbild mit schematisch eingezeichneten Strahlengängen;

die Fig. 3a - 3c drei verschiedene Ausführungsformen der Laserscanvorrichtung jeweils montiert auf einem Luftfahrzeug beim Vermessen einer Umgebung mittels dreier Scaneinheiten, welche jeweils einen Scanfächer aussenden und jeweils einen Sende- und Empfangskanal der Vorrichtung bilden, in einer schematischen Perspektivansicht (Fig. 3a und 3b) bzw. in einer Seitenansicht (Fig. 3c);

Fig. 4 beispielhafte Phasen/Zeit-Diagramme der Ablenkeinrichtungen der Scaneinheiten der Fig. 3a - 3c jeweils für eine Folge von Ablenkperioden;

Fig. 5 eine beispielhafte Verteilung von Scanzeilenscharen auf einem Ausschnitt der Umgebung, wie sie mit den Scanfächern der Fig. 3a - 3c, jedoch ohne erfindungsgemäßen Ortsversatz für die Phasenlagen von Fig. 4 erhalten würde, in einer Draufsicht;

Fig. 6 eine beispielhafte Verteilung von regelmäßig angeordneten Scanzeilenscharen auf einem Ausschnitt der Umgebung, wie sie mit den Scanfächern von Fig. 3a - 3c und dem erfindungsgemäßen Versetzen der Scanzeilenscharen erhalten wird, in einer Draufsicht;

Fig. 7 eine mögliche konstruktive Ausgestaltung der Laserscanvorrichtung der Fig. 3a - 3c beim Ausführen dreier Varianten zum Versetzen der Scanzeilenscharen in einer perspektivischen Seitenansicht mit schematisch eingezeichneten Strahlengängen;

Fig. 8 Phasen/Zeit-Diagramme der Ablenkeinrichtungen der Scaneinheiten der Fig. 3a - 3c für zeitlich versetzte Folgen von Ablenkperioden, die in einer Variante zum Versetzen der Scanzeilenscharen verwendet werden; und

Fig. 9 eine weitere konstruktive Ausgestaltung der Laserscanvorrichtungen der Fig. 3a - 3c beim Ausführen einer der Varianten von Fig. 7 und 8 in einem Blockschaltbild mit schematisch eingezeichneten Strahlengängen.

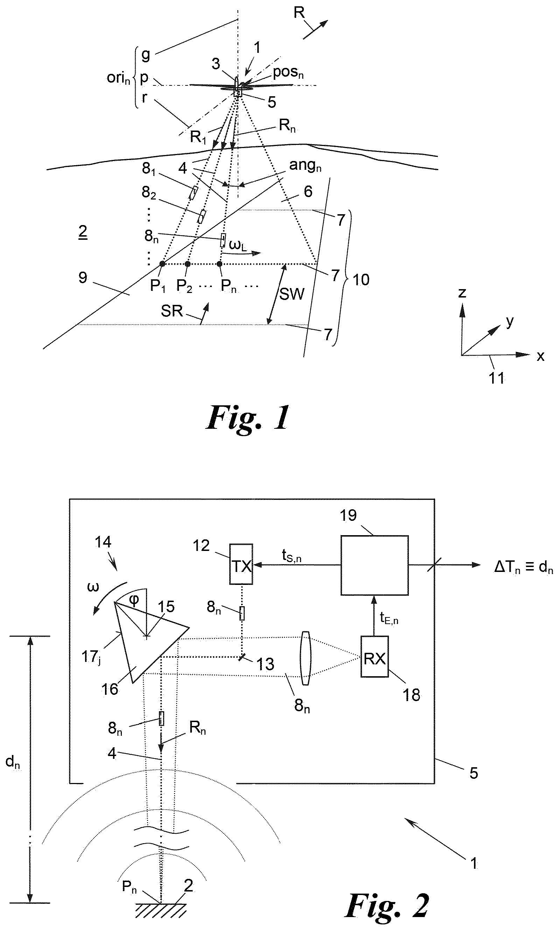

In Fig. 1 ist eine Vorrichtung 1 zum Vermessen einer Umgebung 2 von einem Fahrzeug 3 aus gezeigt. Die zu vermessende Umgebung 2 kann beispielsweise eine Landschaft (Terrain) sein, aber auch der Straßenboden und die Fassaden entlang eines Straßenzugs, die Innenoberfläche einer Halle, eines Tunnels oder Bergwerks, oder die Meeresoberfläche oder der Meeresboden, usw. Bei dem Fahrzeug 3 kann es sich um ein Land-, Luft- oder Wasserfahrzeug handeln, bemannt oder unbemannt. Alternativ könnte die Vorrichtung 1 auch stationär sein und eine gegenüber der Vorrichtung 1 relativbewegte Umgebung 2 vermessen, z.B. auf einem Förderband bewegte Gegenstände, Werkstücke, etc.

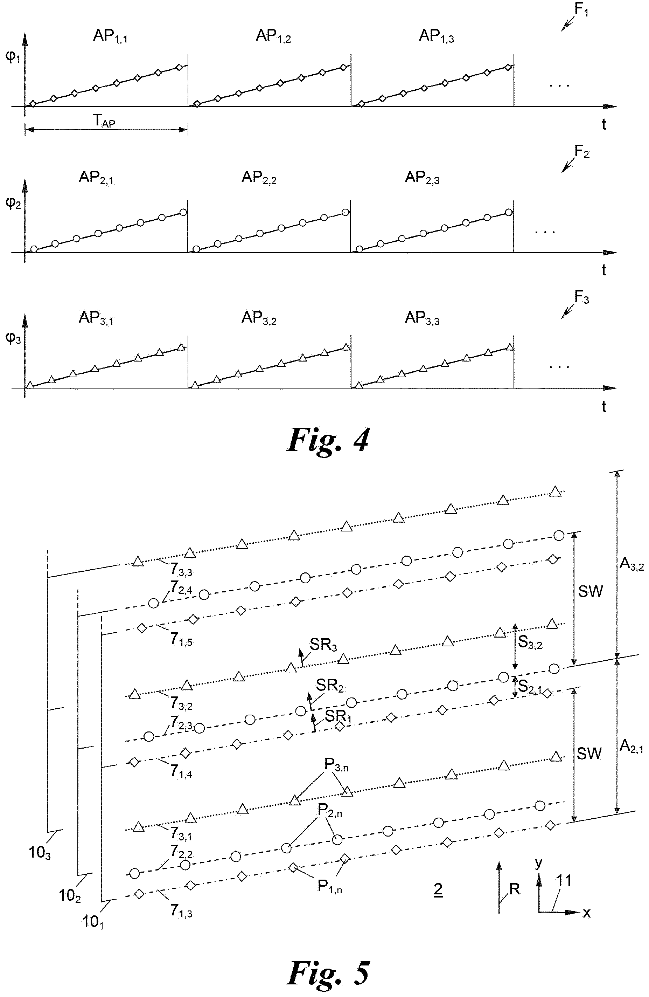

Die Vorrichtung 1 tastet mittels eines ausgesandten Laserstrahles 4 die Umgebung zwecks deren Vermessung ab. Dazu wird der Laserstrahl 4 von einer Scaneinheit 5 mit einer Ablenkperiode AP (siehe dazu später Fig. 4) hin und her geschwenkt. Dadurch durchläuft der Laserstrahl 4 innerhalb jeder Ablenkperiode AP mit einer Winkelgeschwindigkeit $\omega_L$ einen Scanfächer 6, entlang dessen Schnittlinie 7 mit der Umgebung 2, dessen "Scanzeile", Laserimpulse $8_n$ ($n = 1, 2, ...$) des Laserstrahles 4 die Umgebung 2 an zugehörigen Abtastpunkten $P_n$ abtasten.

Zusätzlich wird die Vorrichtung 1 in Bewegungsrichtung R des Fahrzeugs 3 mit einer Relativgeschwindigkeit v vorwärtsbewegt, um über eine Folge F (Fig. 4) aufeinanderfolgender Ablenkperioden AP mit gleicher Ablenkperiodendauer $T_{AP}$ die Umgebung 2 mit mehreren Scanzeilen 7 in einem Scanstreifen 9 abzutasten. Dabei ist ein Abstand SW zwischen zwei aufeinanderfolgenden Scanzeilen 7, die "Schrittweite", für eine ebene zur Bewegungsrichtung R parallele Umgebung 2 bzw. in einer Draufsicht auf die Umgebung 2 durch SW = v · $T_{AP}$ gegeben. Die Scanzeilen 7 aller Ablenkperioden AP bilden eine Scanzeilenschar 10, deren Scharrichtung SR normal zu jeder Scanzeile 7 und tangential zur Umgebung 2, d.h. tangential zu deren abgetasteter Oberfläche ("Topographie") liegt.

Wenn das Fahrzeug 3 z.B. ein Flugzeug ist, ist die Bewegungsrichtung R die Hauptflugrichtung des Flugzeugs, für die es gebaut ist. Die Bewegungsrichtung R liegt dazu nicht in der Ebene des Scanfächers 6, d.h. die Scanzeilen 7 sind nichtparallel zur Bewegungsrichtung R und die Scharrichtung 10 ist nicht-normal zur Bewegungsrichtung R. Im gezeigten Fall ist die Bewegungsrichtung R normal zur Ebene des Scanfächers 6, sodass der Scanfächer 6 in Nadir-Richtung des Fahrzeugs 3 liegt und nach unten auf die Umgebung 2 gerichtet ist. Der Scanfächer 6 kann aber auch z.B. um eine Hochachse g des Fahrzeugs 3 verdreht sein, sodass die Scanzeilen 7 im Scanstreifen 9 schräg zur projizierten Bewegungsrichtung R liegen. In gleicher Weise könnte der Scanfächer 6 um eine Nickachse p und/oder Rollachse r des Fahrzeugs 3 verdreht sein.

Jeder Laserimpuls $8_n$ wird von der Vorrichtung 1 in eine zugehörige Scanrichtung $R_n$ zur Umgebung 2 ausgesandt, von dieser am jeweiligen Abtastpunkt ("Zielpunkt") $P_n$ der Umgebung 2 zurück zur Vorrichtung 1 reflektiert und von der Scaneinheit 5 empfangen. Aus einer Laufzeitmessung der Laserimpulse $8_n$ können Entfernungsmesswerte $d_n$ von der jeweils aktuellen Position $pos_n$ der Vorrichtung 1 zum jeweiligen Abtastpunkt $P_n$ der Umgebung 2 berechnet werden anhand der bekannten Beziehung

$$d_n = c \cdot \Delta T_n/2 = c \cdot (t_{E,n} - t_{S,n})/2 \qquad (4)$$

mit

$t_{s,n}$    Sendezeitpunkt des Laserimpulses $5_n$,
$t_{E,n}$    Empfangszeitpunkt des Laserimpulses $5_n$ und
$c$    Lichtgeschwindigkeit.

In Kenntnis der jeweiligen Position $pos_n$ der Vorrichtung 1 bei Aussendung des Laserimpulses $8_n$ in einem lokalen oder globalen x/y/z-Koordinatensystem 11 der Umgebung 2, der jeweiligen Orientierung $ori_n$ der Vorrichtung 1 im Koordinatensystem 11, angegeben z.B. durch die Kipp-, Roll- und Gierwinkel des Fahrzeugs 3 um seine Quer-, Längs- und Hochachsen p, r, g, und der jeweiligen Winkellage $ang_n$ des Laserimpulses $8_n$ in Richtung auf den Punkt $P_n$ bezüglich des Fahrzeugs 3 kann dann aus dem jeweiligen Entfernungsmesswert $d_n$ die Position des Abtastpunkts $P_n$ im Koordinatensystem 11 berechnet werden. Eine Vielzahl solcherart vermessener und berechneter Abtastpunkte $P_n$ bildet die Umgebung 2, genauer ihre abgetastete Oberfläche, in Form einer "3D-Punktwolke" im Koordinatensystem 11 ab.

Fig. 2 zeigt das Laufzeit-Messprinzip der Vorrichtung 1 in einem Sende/Empfangs-Kanal der Vorrichtung 1, welcher für den in Fig. 1 beispielhaft dargestellten Scanfächer 6 der Scaneinheit 5 zuständig ist.

Gemäß Fig. 2 werden die Laserimpulse $8_n$ in jedem Sende/Empfangs-Kanal der Vorrichtung 1 von einem Lasersender 12 über einen Umlenkspiegel 13 und eine Ablenkeinrichtung 14 ausgesandt. In Fig. 2 ist die Ablenkeinrichtung 14 ein sich um seine Prismenachse 15 mit einer Winkelgeschwindigkeit $\omega$ drehendes Spiegelprisma 16, dessen Mantelseiten jeweils eine Spiegelfläche $17_j$ (j = 1, 2, ..., J) bilden und um dessen Prismenachse 15 der Scanfächer 6 aufgefächert ist. Die aktuelle Winkelstellung des Spiegelprismas 16 innerhalb einer Ablenkperiode AP, die "Phase" der Ablenkeinrichtung 14, ist mit $\varphi$ bezeichnet. Dabei geben die konstante oder variable Winkelgeschwindigkeit $\omega$ und die Anzahl J an Spiegelflächen $17_j$ die genannte Ablenk-Winkelgeschwindigkeit $\omega_L$ und die Ablenkperiodendauer $T_{AP}$ gemäß den Formeln $\omega_L = 2 \cdot \omega$ und $T_{AP} = 360°/(\omega_d \cdot J)$ vor, wobei $\omega_d$ die durchschnittliche Winkelgeschwindigkeit $\omega$ bezeichnet. Alternativ könnte die Ablenkeinrichtung 14 durch jede andere im Stand der Technik bekannte Ablenkeinrichtung ausgeführt sein, z.B. als schwingender Spiegel, rotierende Spiegelpyramide, etc.

Die ausgesandten Laserimpulse $8_n$ werden nach einer Reflexion am jeweiligen Umgebungspunkt $P_n$ auf demselben Weg über die Ablenkeinrichtung 14 zurückerhalten und treffen auf einem Laserempfänger 18 auf, d.h. die aktuelle Blickrichtung des Laserempfängers 18 ist gleich der aktuellen Scanrichtung $R_n$. Die Sendezeitpunkte $t_{S,n}$ der Laserimpulse $8_n$ und die Empfangszeitpunkte $t_{E,n}$ der umgebungsreflektierten Laserimpulse $8_n$ werden einem Entfernungs-Rechner 19 zugeführt, der daraus anhand der Gleichung (4) die jeweilige Entfernung $d_n$ berechnet.

Die Impulsrate (pulse repetition rate, PRR) der Laserimpulse $8_n$ ist konstant oder kann z.B. zur Auflösung von MTA- (multiple time around) -Mehrdeutigkeiten innerhalb einer Ablenkperiode AP moduliert werden, um die Zuordnung von gesendeten und empfangenen Laserimpulsen $8_n$ zueinander zu erleichtern, wie in der Technik bekannt.

Alternativ könnte für eine Laufzeitmessung und Zuordnung des gesendeten und empfangenen Laserstrahls 4 dieser auch nicht gepulst sein, z.B. moduliert oder kontinuierlich ("continuous wave") sein, wie im Stand der Technik bekannt.

Optional können die Winkelgeschwindigkeit $\omega$ und damit die Ablenkperiodendauer $T_{AP}$ der Ablenkeinrichtung 14 und/oder die Relativgeschwindigkeit v an eine gemessene oder erwartete Entfernung $d_n$ angepasst werden, z.B. um über eine Umgebung 2 mit stark veränderlicher Topographie regelmäßige Abstände der Abtastpunkte $P_n$ innerhalb jeder Scanzeile 7 sowie eine regelmäßige Schrittweite SW zwischen aufeinanderfolgenden Scanzeilen 7 zu erhalten.

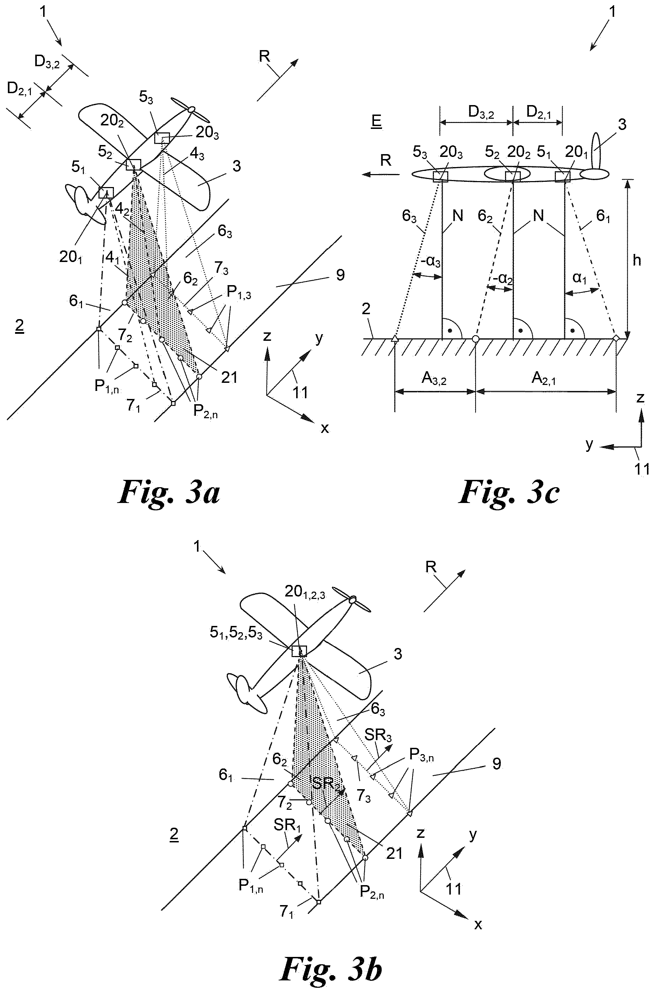

In den Fig. 1 und 2 wurde zur Erklärung des Messprinzips nur der Scanfächer 6 einer Scaneinheit 5 der Vorrichtung 1 bzw. der zugehörige Sende-/Empfangskanal gezeigt. Die Fig. 3a - 3c zeigen dagegen jeweils die auf dem Flugzeug 3 mitgeführte Laserscan-Vorrichtung 1 mit mehreren (hier: drei) wie in Zusammenhang mit den Fig. 1 und 2 beschriebenen Scaneinheiten $5_k$ (k = 1, 2, ..., K; hier K = 3), d.h. in einer vorgegebenen Reihung einer "ersten", "zweiten" und "dritten" Scaneinheit $5_1, 5_2, 5_3$. Es versteht sich, dass die Vorrichtung 1 eine beliebige Anzahl K > 1 an Scaneinheiten $5_k$ haben kann.

Jede der drei Scaneinheiten $5_k$ sendet ihren jeweiligen Laserstrahl $4_k$ mit Laserimpulsen $8_{k,n}$ über eine Folge $F_k$ (Fig. 4) von Ablenkperioden $AP_k$ aus, wobei die Ablenkperiodendauer $T_{AP}$ für alle Scaneinheiten $5_k$ gleich ist. Pro Ablenkperiode $AP_k$ fächert jeder Laserstrahl $4_k$ einen zugehörigen Scanfächer $6_k$ auf, um die Umgebung 2 entlang zugehöriger zur Bewegungsrichtung R nicht-paralleler Scanzeilen $7_k$ abzutasten, die pro Scaneinheit $5_k$ eine Scanzeilenschar $10_k$ bilden.

In der Ausführungsform von Fig. 3a sind die Scanfächer $6_k$ im Wesentlichen parallel und ihre Scheitelpunkte $20_k$ in Bewegungsrichtung R mit gegenseitigen Abständen $D_{k,k-1}$ voneinander beabstandet. In der Ausführungsform von Fig.

3b sind die Scanfächer $6_k$ nicht parallel und ihre Scheitelpunkte $20_k$ fallen zusammen. In der Ausführungsform von Fig. 3c sind die Scheitelpunkte $20_k$ der Scanfächer $6_k$ in Bewegungsrichtung R mit gegenseitigen Abständen $D_{k,k-1}$ voneinander beanstandet, und die Scanfächer $6_k$ sind unter verschiedenen Winkeln $\alpha_1, \alpha_2, \alpha_3$ zu einer Normalen N auf die als Ebene approximierte Umgebung 2 in einer von der Bewegungsrichtung R und der Normalen N aufgespannten Ebene E angeordnet.

In jeder der Ausführungsformen der Fig. 3a - 3c sind die Scharrichtungen $SR_k$ der Scanzeilenscharen $10_k$ in einer Draufsicht auf die Umgebung 2, d.h. von der Vorrichtung 1 aus gesehen, im Wesentlichen parallel und die Scanfächer $6_k$ überlappen einander in Bewegungsrichtung R gesehen im Wesentlichen in einem gemeinsamen Überlappungsbereich 21 (schraffiert), in welchem somit in Bewegungsrichtung R gesehen die Abtastpunkte $P_{k,n}$ mehrerer Scanfächer $6_k$ zu liegen kommen. Dadurch verfolgt ein in Bewegungsrichtung R gesehen hinterer ("trailing") Scanfächer $6_k$ wegen der Relativbewegung zwischen Vorrichtung 1 und Umgebung 2 einen in dieser Richtung gesehen vorderen ("leading") Scanfächer $6_k$ und scannt dessen bereits vermessenen Teil des gemeinsamen Scanstreifens 9 erneut. So kann z.B. der hintere Scanfächer $6_1$ die Scanzeilen $7_2, 7_3$ seiner beiden vorderen Scanfächer $6_2, 6_3$ und der hintere Scanfächer $6_2$ die Scanzeilen $7_3$ seines vorderen Scanfächers $6_3$ erneut scannen. Durch die im Wesentlichen parallelen Scharrichtungen $SR_k$ sind die Scanzeilen $7_k$ der hinteren Scanfächer $6_k$, wenn die hinteren Scanfächer $6_k$ die bereits gescannten Scanzeilen $7_k$ eines vorderen Scanfächers $6_k$ einholen, zu diesen im Wesentlichen parallel.

Die Scanfächer $6_k$ sind nicht notwendigerweise eben. Beispielsweise können in den Fig. 3b und 3c die in Fortbewegungsrichtung F nach vorne bzw. nach hinten geneigten Scanfächer $6_1, 6_3$ - z.B. aufgrund des Ablenkmechanismus der Laserimpulse $8_{k,n}$ - auf schwach gekrümmten Kegelmantelflächen liegen. Dies kann für die Zwecke der vorliegenden Erfindung unberücksichtigt bleiben; unter "im Wesentlichen parallelen" Scanfächern, Scanzeilen bzw. Scanzeilenscharen werden in der vorliegenden Offenbarung somit auch solche verstanden, welche z.B. leicht unterschiedlich gekrümmt sind oder nur in ihren mittleren Bereichen weitgehend parallel sind.

Anstelle wie in den Fig. 3a - 3c dargestellt könnten die Scanfächer $6_k$ auch in beliebiger anderer Lage zueinander liegen, solange sie einander zumindest paarweise jeweils in einem Überlappungsbereich 21 überlappen und die Scharrichtungen $SR_k$ ihrer Scanzeilen $7_k$ im Wesentlichen parallel sind.

Die Fig. 4 und 5 illustrieren ein gegenseitig unkoordiniertes Ablenken der Laserstrahlen $4_k$ der einzelnen Scaneinheiten $5_k$, d.h. jeweils ohne Berücksichtigung der anderen Scaneinheiten $5_k$. Dazu ist in Fig. 4 die Phase $\varphi_k$ der Ablenkeinrichtung $14_k$ jeder Scaneinheit $5_k$ über der Zeit t für deren jeweilige Folge $F_k$ von Ablenkperioden $AP_{k,p}$ (p = 1, 2, ...) aufgetragen. In Fig. 5 sind die damit erzeugten Scharen $10_k$ von Scanzeilen $7_{k,p}$ der Scaneinheiten $5_k$ für mehrere Ablenkperioden $AP_{k,p}$ dargestellt.

Die Ablenkeinrichtungen $14_k$ lenken ihre Laserstrahlen $4_k$ im gezeigten Beispiel synchron mit derselben Ablenkperiodendauer $T_{AP}$, derselben Winkelgeschwindigkeit $\omega$ und derselben Phase $\varphi_k(t)$ ab, d.h. ihre Folgen $F_k$ von Ablenkperioden $AP_{k,p}$ sind i-dent. Je nach Größe von Ablenkperiodendauer $T_{AP}$, Relativgeschwindigkeit v und Lage der Scanfächer $6_k$ stellen sich dadurch unterschiedliche Verteilungen der Scanzeilen $7_{k,p}$ auf der Umgebung 2 ein, wie im Folgenden vereinfacht anhand einer ebenen Umgebung 2 in Fig. 5 gezeigt ist.

Wenn ein Simultanabstand $A_{k,k-1}$, d.h. ein Abstand zwischen zwei gleichzeitig vermessenen Scanzeilen $7_{k,p}$, $7_{k-1,p}$ unterschiedlicher Scanfächer $6_k, 6_{k-1}$, ein Vielfaches der Schrittweite SW ist, also $A_{k,k-1} = m \cdot SW$ (m ... eine natürliche Zahl), kommen die Scanzeilen $7_{k,p}, 7_{k-1,q}$ (q ≠ p) unterschiedlicher Scanfächer $6_k, 6_{k-1}$ zwar wegen der Relativbewegung in Richtung R zeitlich nacheinander, jedoch örtlich gesehen am selben Ort zu liegen. Dadurch können z.B. die Abtastpunkte $P_{1,n}$ (als Rauten dargestellt) und $P_{2,n}$ (als Kreise dargestellt) der hinteren Scanfächer $6_1, 6_2$ mit den bereits gescannten Abtastpunkten $P_{3,n}$ (als Dreiecke dargestellt) des vorderen Scanfächers $6_3$ zusammenfallen, d.h. die Scanzeilenscharen $10_k$ fallen - abgesehen von den Anfangs- und Endphasen des Scannens - zusammen. Wie aus Fig. 3c ersichtlich, lässt sich der Simultanabstand $A_{k,k-1}$ unter Ermittlung oder Vorgabe eines Normalabstandes h zwischen Vorrichtung 1 und Umgebung 2 und der Winkel $\alpha_k, \alpha_{k-1}$ der jeweiligen Scanfächer $6_k, 6_{k-1}$ ermitteln als $A_{k,k-1} = D_{k,k-1} + h \cdot (\tan(\alpha_k) - \tan(\alpha_{k-1}))$.

Wenn der Simultanabstand $A_{k,k-1}$ kein Vielfaches der Schrittweite SW ist, also $A_{k,k-1} \neq m \cdot SW$ ("Teilerfremdheit"), fallen die Scanzeilen $7_k, 7_{k-1}$ unterschiedlicher Scaneinheiten $5_k, 5_{k-1}$ nicht zusammen, sondern ihre Scanzeilenscharen $10_k$ sind voneinander mit einer gegenseitigen Verschiebung $S_{k,k-1}$ beabstandet. Dadurch ergibt sich in der Regel ein unregelmäßiges Nebeneinanderfallen der Scanzeilen $7_k$ aller Scaneinheiten $5_k$ wie in Fig. 5 gezeigt.

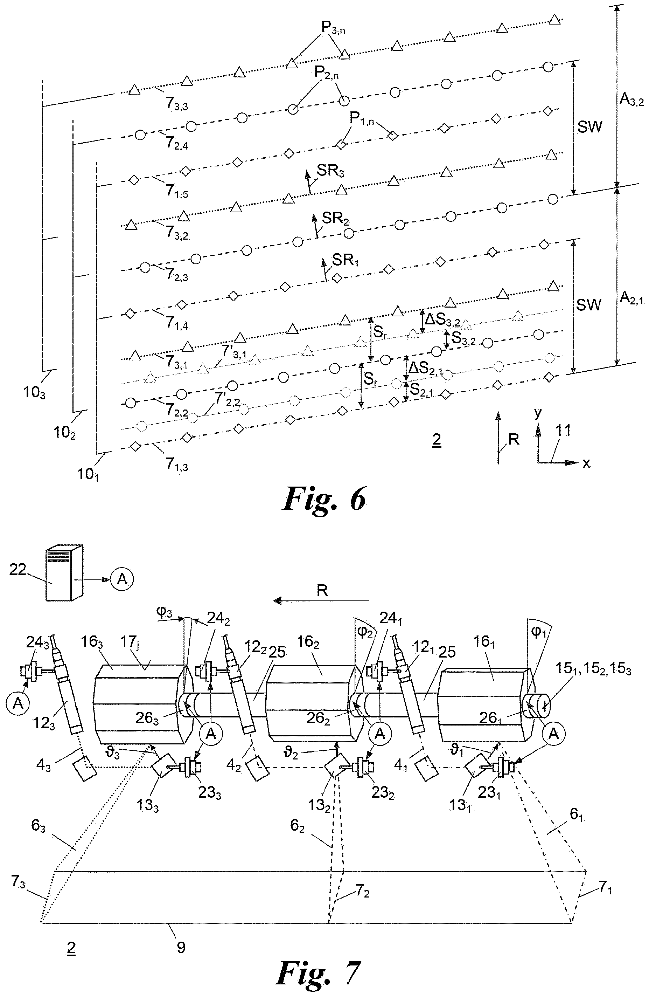

Die Fig. 6 - 9 illustrieren, wie ein solches Zusammenfallen oder unregelmäßiges Nebeneinanderfallen der Scanzeilen $7_{k,p}$ unterschiedlicher Scaneinheiten $5_k$ verhindert und die Scanzeilen $7_{k,p}$ gleichmäßiger über die Umgebung 2 verteilt werden können.

Dazu wird, wie in Fig. 6 dargestellt, die Scanzeilenschar $10_2$ der zweiten Scaneinheit $5_2$ gegenüber der Scanzeilenschar $10_1$ der benachbarten ersten Scaneinheit $5_1$ und die Scanzeilenschar $10_3$ der dritten Scaneinheit $5_3$ gegenüber der Scanzeilenschar $10_2$ der benachbarten zweiten Scaneinheit $5_2$ jeweils um einen Ortsversatz $\Delta S_{2,1}$ bzw. $\Delta S_{3,2}$ in Bewegungsrichtung R versetzt. Es sei erwähnt, dass die Reihung der Scaneinheiten $5_k$ beliebig ist, d.h. welche der Scaneinheiten $5_k$ als "erste", "zweite", "dritte" usw. bezeichnet wird, ist beliebig. Der Ausdruck "benachbarte" Scaneinheit $5_k$ ist demgemäß nicht im örtlichen Sinne sondern in einem numerischen Sinne in dieser beliebig vorgegebenen Reihung zu verstehen.

Beispielsweise werden bei drei Scaneinheiten $5_1$, $5_2$, $5_3$ die Ortsversätze $\Delta S_{2,1}$ und $\Delta S_{3,2}$ so gewählt, dass sie addiert mit der zugehörigen, durch die Teilerfremdheit von Schrittweite SW und Simultanabstand $A_{k,k-1}$ verursachten Verschiebung $S_{k,k-1}$ einem Drittel der Schrittweite SW entsprechen, wodurch die Scanzeilen $7_k$ aller Scanfächer $6_k$, wenn diese ein und denselben Bereich des Scanstreifens 9 durchschritten haben, dort in regelmäßigen Abständen $S_r$ = SW/3 zu liegen kommen. Insbesondere entspricht der Ortsversatz $\Delta S_{k,k-1}$ zweier Scanzeilenscharen $10_k$, $10_{k-1}$, vermehrt um die Verschiebung $S_{k,k-1}$ zwischen diesen zwei Scanzeilenscharen $10_k$, $10_{k-1}$, jeweils der Schrittweite SW zwischen zwei von einem Scanfächer $6_k$ aufeinanderfolgend abgetasteten Scanzeilen $7_{k,p}$, $7_{k,p+1}$ dividiert durch die Anzahl K aller Scaneinheiten $5_k$.

Wird optional zusätzlich die Impulswiederholrate PRR von einer gemessenen oder erwarteten Entfernung $d_{k,n}$ zur Umgebung 2 abhängig gewählt und innerhalb der Ablenkperiode $AP_{k,p}$ verändert, können die Abtastpunkte $P_{k,n}$ wie in Fig. 5 und 6 gezeigt auch innerhalb der Scanzeile $7_{k,p}$ regelmäßig angeordnet werden.

Die Fig. 7 - 9 zeigen drei mögliche Varianten zum Versetzen der Scanzeilenscharen $10_k$ auf die in Fig. 6 beschriebene Art und Weise. Für jede dieser Varianten weist die Vorrichtung 1 eine Steuereinrichtung 22 auf, die optische Elemente im Strahlengang der zugehörigen Laserstrahlen $4_k$, z.B. elektrooptische Elemente, Spiegel, Prismen etc., steuert, um die Scanzeilenscharen $10_k$ zu versetzen.

In einer ersten Variante (Fig. 7) enthält die Steuereinrichtung 22 jeweils einen gesteuerten Aktuator $23_k$ für jede Scaneinheit $5_k$, der die Lage ihres Umlenkspiegels $13_k$, d.h. seine Position und/oder Orientierung, verstellen kann. Dadurch werden eine jeweilige Senderichtung $\vartheta_k$ auf das jeweilige Spiegelprisma $16_k$ und damit der zugehörige Scanfächer $6_k$ je nach benötigtem Ortsversatz $\Delta S_{k,k-1}$ verschoben bzw. verkippt, d.h. der Winkel $\alpha_k$ zwischen Scanfächer $6_k$ und Normale N und/oder der Abstand $D_{k,k-1}$ zwischen Scanfächer-Scheitelpunkten $20_k$ verändert.

In einer zweiten Variante (Fig. 7) sind die Lasersender $12_k$ verstellbar gelagert und die Steuereinrichtung 22 steuert Aktuatoren $24_k$, die die Position und/oder Orientierung, d.h. die Lage, des jeweiligen Lasersenders $12_k$ gegenüber einem gemeinsamen oder (hier:) jeweiligen Spiegelprisma $16_k$ und damit die Senderichtung $\vartheta_k$ verändern und den Ortsversatz $\Delta S_{k,k-1}$ einstellen können.

Es versteht sich, dass zur Laufzeitmessung die Laserimpulse $8_{k,n}$ der verschobenen bzw. verkippten Scanfächer $6_k$ auch in der ersten und zweiten Variante von den zugehörigen Laserempfängern $18_k$ empfangen werden müssen. Dazu weisen diese Laserempfänger $18_k$ in einer Ausführungsform eine Empfangsapertur auf, welche so groß ist, dass die reflektierten Laserimpulse $8_{k,n}$ sie trotz des Verschiebens bzw. Verkippens des zugehörigen Scanfächers $6_k$ passieren. In einer alternativen Ausführungsform behalten diese Laserempfänger $18_k$ ihre z.B. optimal angepasste Empfangsapertur bei und die Blickrichtungen dieser Laserempfänger $18_k$ werden mit dem zugehörigen Scanfächer $6_k$ mitverschoben bzw. -verkippt. Für dieses Mitverkippen bzw. -verschieben könnte die Steuereinrichtung 22 - wie in der ersten bzw. zweiten Variante für den Sendekanal beschrieben - mittels Aktuatoren verstellbare optische Elemente im Empfangskanal haben oder die Lage dieser Laserempfänger $18_k$ selbst steuern.

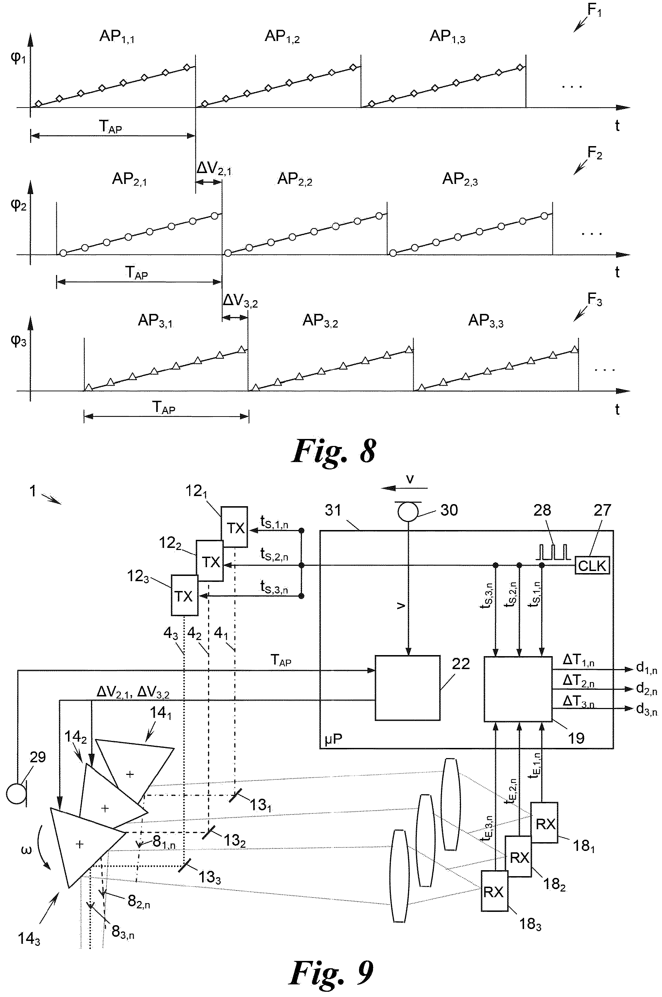

In einer dritten, in den Fig. 7 - 9 gezeigten Variante steuert die Steuereinrichtung 22 auf einer gemeinsamen Antriebswelle 25 der Spiegelprismen $16_k$ gelagerte Aktuatoren $26_k$, mit denen die Spiegelprismen $16_k$ jeweils individuell gegenüber der Antriebswelle 25 verdreht werden können, um die Phasenlage $\Delta\varphi_{k,k-1}$ = $\varphi_k$ - $\varphi_{k-1}$ zwischen zwei Spiegelprismen $16_k$, $16_{k-1}$ einzustellen. Durch Einstellen der Phasenlage $\Delta\varphi_{k,k-1}$ erfolgt gleichsam ein in Fig. 8 gezeigtes zeitliches Versetzen der Folgen $F_k$ von Abtastperioden $AP_{k,p}$ um einen entsprechenden zeitlichen Versatz $\Delta V_{k,k-1} = \Delta\varphi_{k,k-1}$ / $\omega$.

Dass ein derartiges Steuern der Phasenlagen $\Delta\varphi_{k,k-1}$ bzw. der Folgen $F_k$ auch zu einem Ortsversatz $\Delta S_{k,k-1}$ der jeweiligen Scanzeilenschar $10_k$ in Bewegungsrichtung R führt, ist aus Fig. 6 ersichtlich: So wird beispielsweise eine Scanzeile $7'_{2,2}$, wie sie ohne Versetzen der Phasenlage $\Delta\varphi_{2,1}$ entstehen würde (Fig. 5), durch Zeitverzögern der zugehörigen Ablenkperiode $AP_{2,2}$ um den zeitlichen Versatz $\Delta V_{2,1}$, während dessen die Scaneinheit $5_k$ aufgrund ihrer Relativbewegung in Bewegungsrichtung R die Strecke und damit den Ortsversatz $\Delta S_{2,1} = v \cdot \Delta V_{2,1}$ zurücklegt, tatsächlich als um den Ortsversatz $\Delta S_{2,1}$ verschobene Scanzeile $7_{2,2}$ erzeugt.

Fig. 9 zeigt ein Blockschaltbild einer elektronischen Realisierung dieser dritten Variante in einer dreikanaligen Vorrichtung 1 gemäß den Ausführungsbeispielen von Fig. 3a - 3c. Jede Scaneinheit $5_k$ umfasst einen Lasersender $12_k$ und einen zugehörigen Laserempfänger $18_k$, die jeweils über eine Ablenkeinrichtung $14_k$ - wie in Fig. 2 für einen Kanal gezeigt - zusammenwirken und an einen gemeinsamen Entfernungs-Rechner 19 angeschlossen sind, der die jeweiligen Entfernungen $d_{k,n}$ zu den Abtastpunkten $P_{k,n}$ berechnet. Ein Taktgenerator 27 erzeugt einen Steuerimpulszug 28 für die Lasersender $12_k$, die daraus die Laserimpulse $8_{k,n}$ erzeugen. Die Steuereinrichtung 22 verzögert die zugehörige Ablenkeinrichtung $14_k$ gegenüber der Ablenkeinrichtung $14_{k-1}$ einer in der Reihung der Scaneinheiten $5_k$ benachbarten Scaneinheit $5_{k-1}$ um den zeitlichen Versatz $\Delta V_{k,k-1}$ und damit die zugehörige Folge $F_k$ von Ablenkperioden $AP_{k,p}$, siehe Fig. 8. Um die Folgen $F_k$ um den jeweiligen zeitlichen Versatz $\Delta V_{k,k-1}$ zu verzögern kann die Steuereinrichtung 22 wie erwähnt die Aktuatoren $26_k$ steuern oder alternativ Ansteuersignale der Ablenkeinrichtungen $14_k$, z.B. bei Ablenkeinrichtungen mit Schwingspiegeln, um die zeitlichen Versätze $\Delta V_{k,k-1}$ versetzen.

In jeder der genannten Varianten kann der jeweils anzuwendende Ortsversatz $\Delta S_{k,k-1}$, der zeitliche Versatz

$\Delta V_{k,k-1}$ bzw. die Phasenlage $\Delta \varphi_{k,k-1}$ von der Steuereinrichtung 22 bestimmt werden. Dazu erhält die Steuereinrichtung 22 z.B. die aktuelle Ablenkperiodendauer $T_{AP}$ von einem ersten Sensor 29 und die Relativgeschwindigkeit v von einem zweiten Sensor 30 und bestimmt davon abhängig die jeweiligen Werte.

Die Steuereinrichtung 22 kann gemeinsam mit dem Entfernungs-Rechner 19 in einem Prozessorsystem 31 implementiert sein, u.zw. in Hard- und/oder Software.

In allen genannten Ausführungsformen und Varianten versetzt die Steuereinrichtung 22 also die Scanzeilenscharen $10_k$ in Bewegungsrichtung R, u.zw. die zweite Scanzeilenschar $10_2$ gegenüber der ersten Scanzeilenschar $10_1$ um den Ortsversatz $\Delta S_{2,1}$ und die dritte Scanzeilenschar $10_3$ gegenüber der zweiten Scanzeilenschar $10_2$ um den Ortsversatz $\Delta S_{3,2}$. Beispielsweise könnte $\Delta S_{k,k-1} = \Delta V_{k,k-1} \cdot v$ sein, um die in einer Draufsicht auf die Umgebung 2 gleichmäßigen Scanzeilenscharen $10_k$ von Fig. 6 zu erhalten.

Insbesondere kann die Steuereinrichtung 22 die Ortsversätze $\Delta S_{k,k-1}$, die Phasenlagen $\Delta \varphi_{k,k-1}$ und/oder die zeitlichen Versätze $\Delta V_{k,k-1}$ für die Ausführungsform von Fig. 3a und die Scanzeilen-Vergleichmäßigung von Fig. 6 gemäß einer der Formeln

$$\Delta S_{k,k-1} = \frac{v \cdot T_{AP}}{K} - D_{k,k-1} \bmod \left( v \cdot T_{AP} \right) \qquad (2)$$

$$\Delta \varphi_{k,k-1} = \frac{360°}{K \cdot J} - D_{k,k-1} \cdot \frac{360°}{J \cdot v \cdot T_{AP}} \qquad (3)$$

$$\Delta V_{k,k-1} = \frac{T_{AP}}{K} - \frac{D_{k,k-1}}{v} \qquad (5)$$

$$\Delta V_{k,k-1} = \frac{T_{AP}}{K} - \frac{1}{v} \left[ D_{k,k-1} \bmod (v \cdot T_{AP}) \right] \qquad (6)$$

einstellen, mit

K       Anzahl der Scaneinheiten $5_k$,
J       Anzahl der Spiegelflächen $17_j$,
$\Delta S_{k,k-1}$    Ortsversatz der k-ten Scanzeilenschar $10_k$ gegenüber der (k-1)-ten Scanzeilenschar $10_{k-1}$;
$\Delta \varphi_{k,k-1}$    Phasenlage des Spiegelprismas 16 der k-ten Scaneinheit $5_k$ gegenüber dem Spiegelprisma 16 der (k-1)-ten Scaneinheit $5_{k-1}$,
$\Delta V_{k,k-1}$    zeitlicher Versatz der Folge $F_k$ der k-ten Scaneinheit $5_k$ gegenüber der Folge $F_{k-1}$ der (k-1)-ten Scaneinheit $5_{k-1}$,
v       Relativgeschwindigkeit,
AP      Ablenkperiodendauer,
$D_{k,k-1}$    Distanz zwischen dem k-ten und (k-1)-ten Scanfächer $6_k$ entlang der Bewegungsrichtung R und
mod     Modulo-Operator.

Optional kann die Steuereinrichtung 22 den einzustellenden Ortsversatz $\Delta S_{k,k-1}$, die Phasenlagen $\Delta \varphi_{k,k-1}$ und/oder die zeitlichen Versätze $\Delta V_{k,k-1}$ auch abhängig von weiteren Werten, z.B. den Winkeln $\alpha_k$, dem Normalabstand h, usw. bestimmen. Dabei können die regelmäßigen Abstände $S_r$ von Fig. 6 von der Steuereinrichtung 22, z.B. für die Ausführungsform der Fig. 3c, erreicht werden gemäß

$$\Delta S_{k,k-1} = \frac{v \cdot T_{AP}}{K} - \left[ D_{k,k-1} + h \cdot (\tan \alpha_k - \tan \alpha_{k-1}) \right] \bmod \left( v \cdot T_{AP} \right) \qquad (1)$$

$$\Delta \varphi_{k,k-1} = \frac{360°}{K \cdot J} - \frac{360°}{v \cdot T_{AP} \cdot J} \left( \left[ D_{k,k-1} + h \cdot (\tan \alpha_k - \tan \alpha_{k-1}) \right] \bmod \left( v \cdot T_{AP} \right) \right) \qquad (7)$$

$$\Delta V_{k,k-1} = \frac{T_{AP}}{K} - \frac{1}{v}\left(\left[D_{k,k-1} + h \cdot (\tan \alpha_k - \tan \alpha_{k-1})\right] \mathrm{mod}\left(v \cdot T_{AP}\right)\right) \tag{8}$$

mit

K          Anzahl der Scaneinheiten $5_k$,

$\Delta S_{k,k-1}$     Ortsversatz der k-ten Scanzeilenschar $10_k$ gegenüber der (k-1)-ten Scanzeilenschar $10_{k-1}$;

$\Delta\varphi_{k,k-1}$     Phasenlage des Spiegelprismas 16 der k-ten Scaneinheit $5_k$ gegenüber dem Spiegelprisma 16 der (k-1)-ten Scaneinheit $5_{k-1}$,

$\Delta V_{k,k-1}$     zeitlicher Versatz der Folge $F_k$ der k-ten Scaneinheit $5_k$ gegenüber der Folge $F_{k-1}$ der (k-1)-ten Scaneinheit $5_{k-1}$,

v          Relativgeschwindigkeit,

$T_{AP}$      Ablenkperiodendauer,

$D_{k,k-1}$     Distanz zwischen den Scheitelpunkten $20_k$ der k-ten und (k-1)-ten Scanfächer $6_k$ entlang der Bewegungsrichtung R,

h ......     erwarteter Normalabstand zwischen Vorrichtung 1 und Umgebung 2,

$\alpha_k$        Winkel von der erwarteten Normalen N auf die Umgebung 2 zum k-ten Scanfächer $6_k$ in der von der Bewegungsrichtung R und der erwarteten Normalen N aufgespannten Ebene E und

mod       Modulo-Operator.

Hiefür können die Normale N, der Normalabstand h und die Winkel $\alpha_k$, $\alpha_{k-1}$ geschätzt oder erwartet, z.B. aus vergangenen Abtastpunkten $P_{k,n}$ und der Lage der Vorrichtung 1 ermittelt, werden. Bei einer nicht-ebenen Umgebung 2 kann dazu eine Draufsicht auf die Umgebung 2 verwendet oder die Umgebung 2 z.B. durch eine Ebene, insbesondere eine Tangentialebene an ihre Oberfläche (Topographie), approximiert werden.

Selbstverständlich können in weiteren Varianten auch noch weitere, der Ablenkeinrichtung 14 vor- oder nachgeschaltete optische Elemente im Strahlengang der Laserstrahlen $4_k$ vorliegen, welche zum Versetzen der Scanzeilenscharen $10_k$ von der Steuereinrichtung 22 gesteuert werden können.

## Patentansprüche

1. Vorrichtung zur Vermessung einer gegenüber der Vorrichtung (1) in einer Bewegungsrichtung (R) mit einer Relativgeschwindigkeit (v) relativbewegten Umgebung (2) durch Laufzeitmessung von daran reflektierten Laserstrahlen (4) in einem Koordinatensystem (11), umfassend

eine erste Scaneinheit ($5_1$) zum Aussenden eines ersten Laserstrahls ($4_1$) über eine erste Folge ($F_1$) von Ablenkperioden ($AP_{1,p}$) mit einer jeweiligen Ablenkperiodendauer ($T_{AP}$), der in jeder Ablenkperiode ($AP_{1,p}$) einen ersten Scanfächer ($6_1$) durchläuft und die Umgebung (2) entlang einer ersten zur Bewegungsrichtung (R) nicht-parallelen Scanzeile ($7_{1,p}$) abtastet, wobei die ersten Scanzeilen ($7_{1,p}$) eine erste Scanzeilenschar ($10_1$) bilden, und zum Empfangen der zugehörigen von der Umgebung (2) reflektierten Laserstrahls ($4_1$),

zumindest eine weitere Scaneinheit ($5_k$) zum Aussenden eines weiteren Laserstrahls ($4_k$) über eine weitere Folge ($F_k$) von Ablenkperioden ($AP_{k,p}$) mit derselben jeweiligen Ablenkperiodendauer ($T_{AP}$), der in jeder Ablenkperiode ($AP_{k,p}$) einen weiteren Scanfächer ($6_k$) durchläuft und die Umgebung (2) entlang einer weiteren zur Bewegungsrichtung (R) nicht-parallelen Scanzeile ($7_{k,p}$) abtastet, wobei die weiteren Scanzeilen ($7_{k,p}$) eine weitere Scanzeilenschar ($10_k$) bilden, und zum Empfangen des zugehörigen von der Umgebung (2) reflektierten Laserstrahls ($4_k$),

wobei sich alle Scanfächer ($6_k$) in Bewegungsrichtung (R) gesehen im Wesentlichen überlappen und die Scharrichtungen ($SR_k$) aller Scanzeilenscharen ($10_k$) von der Vorrichtung (1) aus gesehen im Wesentlichen parallel sind,

**dadurch gekennzeichnet, dass** die Vorrichtung (1) dazu ausgebildet ist, mittels der ersten Scaneinheit ($5_1$) und der zumindest einen weiteren Scaneinheit ($5_i$) gleichzeitig zwei oder mehr Scanfächer ($6_1$, $6_k$) auszusenden, und eine an die zumindest eine weitere Scaneinheit ($5_k$) angeschlossene Steuereinrichtung (22) aufweist, welche dazu ausgebildet ist, die Scanzeilenschar ($10_k$) jeder weiteren Scaneinheit ($5_k$) gegenüber der Scanzeilenschar ($10_k$) einer in einer vorgegebenen Reihung der Scaneinheiten ($5_k$) jeweils benachbarten Scaneinheit ($5_{k-1}$) in Bewegungsrichtung (R) um einen von der Relativgeschwindigkeit (v) und der Ablenkperiodendauer ($T_{AP}$) abhängigen Ortsversatz ($\Delta S_{k,k-1}$) so zu versetzen, dass die genannten weiteren Scanzeilen ($7_{k,p}$) nicht mit den genannten ersten Scanzeilen ($7_{k,p}$) zusammenfallen.

2. Vorrichtung nach Anspruch 1, **dadurch gekennzeichnet, dass** sie auf einem Fahrzeug (3), bevorzugt auf einem Luftfahrzeug, montiert ist.

3. Vorrichtung nach einem der Ansprüche 1 oder 2, **dadurch gekennzeichnet, dass** die Steuereinrichtung (22) dazu ausgebildet ist, die Ablenkperiodendauer ($T_{AP}$) und/oder die Relativgeschwindigkeit (v) abhängig von zumindest einem vergangenen Entfernungsmesswert ($d_{k,n}$) der Umgebung (2) vorzugeben.

4. Vorrichtung nach einem der Ansprüche 1 bis 3, **dadurch gekennzeichnet, dass** die Steuereinrichtung (22) dazu ausgebildet ist, die Scanzeilenschar ($10_k$) jeder weiteren Scaneinheit ($5_k$) gegenüber der Scanzeilenschar ($10_{k-1}$) einer in einer vorgegebenen Reihung der Scaneinheiten ($5_k$) jeweils benachbarten Scaneinheit ($5_{k-1}$) so zu versetzen, dass die Scanzeilen ($7_k$) in Bewegungsrichtung (R) in regelmäßigen Abständen ($S_r$) angeordnet sind.

5. Vorrichtung nach einem der Ansprüche 1 bis 4, **dadurch gekennzeichnet, dass** der Ortsversatz ($\Delta S_{k,k-1}$) zwischen den Scanzeilenscharen ($10_k$, $10_{k-1}$) je zweier in der Reihung einander benachbarter Scaneinheiten ($5_k$, $5_{k-1}$), vermehrt um eine in Bewegungsrichtung (R) liegende, ohne diesen Ortsversatz ($\Delta S_{k,k-1}$) durch die Relativbewegung verursachte Verschiebung ($S_{k,k-1}$) zwischen diesen zwei Scanzeilenscharen ($10_k$, $10_{k-1}$), dem in Bewegungsrichtung (R) liegenden Abstand (SW) zwischen zwei aufeinanderfolgenden Scanzeilen ($7_{k,p}$, $7_{k,p+1}$) einer Scaneinheit ($5_k$), dividiert durch die Anzahl (K) aller Scaneinheiten ($5_k$), entspricht.

6. Vorrichtung nach einem der Ansprüche 1 bis 5, **dadurch gekennzeichnet, dass** der Ortsversatz ($\Delta S_{k,k-1}$) zwischen den Scanzeilenscharen ($10_k$, $10_{k-1}$) je zweier in der Reihung einander benachbarter Scaneinheiten ($5_k$, $5_{k-1}$) gewählt ist als

$$\Delta S_{k,k-1} = \frac{v \cdot T_{AP}}{K} - \left[ D_{k,k-1} + h \cdot (\tan \alpha_k - \tan \alpha_{k-1}) \right] \mathrm{mod}\left( v \cdot T_{AP} \right)$$

mit

K Anzahl der Scaneinheiten ($5_k$),
$\Delta S_{k,k-1}$ Ortsversatz der k-ten Scanzeilenschar ($10_k$) gegenüber der (k-1)-ten Scanzeilenschar ($10_{k-1}$),
v Relativgeschwindigkeit,
$T_{AP}$ Ablenkperiodendauer,
$D_{k,k-1}$ Distanz zwischen Scheitelpunkten ($20_k$) der k-ten und (k-1)-ten Scanfächer ($6_k$, $6_{k-1}$) entlang der Bewegungsrichtung (R),
h erwarteter Normalabstand zwischen Vorrichtung (1) und Umgebung (2),
$\alpha_k$ Winkel von einer erwarteten Normalen (N) auf die Umgebung (2) zum k-ten Scanfächer ($6_k$) in einer von der Bewegungsrichtung (R) und der erwarteten Normalen (N) aufgespannten Ebene (E) und
mod .... Modulo-Operator.

7. Vorrichtung nach einem der Ansprüche 1 bis 6, **dadurch gekennzeichnet, dass** alle Scanfächer ($6_k$) im Wesentlichen parallel sind.

8. Vorrichtung nach Anspruch 7, **dadurch gekennzeichnet, dass** der Ortsversatz ($\Delta S_{k,k-1}$) zwischen den Scanzeilenscharen ($10_k$, $10_{k-1}$) je zweier in der Reihung einander benachbarter Scaneinheiten ($5_k$, $5_{k-1}$) gewählt ist als

$$\Delta S_{k,k-1} = \frac{v \cdot T_{AP}}{K} - D_{k,k-1} \,\mathrm{mod}\left( v \cdot T_{AP} \right)$$

mit

K Anzahl der Scaneinheiten ($5_k$),
$\Delta S_{k,k-1}$ Ortsversatz der k-ten Scanzeilenschar ($10_k$) gegenüber der (k-1)-ten Scanzeilenschar ($10_{k-1}$),
v Relativgeschwindigkeit,
$T_{AP}$ Ablenkperiodendauer,
$D_{k,k-1}$ Distanz zwischen dem k-ten und (k-1)-ten Scanfächer ($6_k$, $6_{k-1}$) entlang der Bewegungsrichtung (R) und
mod Modulo-Operator.

9. Vorrichtung nach einem der Ansprüche 1 bis 8, **dadurch gekennzeichnet, dass** die Steuereinrichtung (22) dazu ausgebildet ist, die Scanzeilenschar ($10_k$) der genannten zumindest einen weiteren Scaneinheit ($5_k$) durch Steuern optischer Elemente im Strahlengang ihres Laserstrahles ($4_k$) zu versetzen.

10. Vorrichtung nach Anspruch 9, **dadurch gekennzeichnet, dass** die Steuereinrichtung (22) dazu ausgebildet ist, die Scanzeilenschar ($10_k$) der genannten zumindest einen weiteren Scaneinheit ($5_k$) durch Steuern eines zeitlichen Versatzes ($\Delta V_{k,k-1}$) der jeweiligen Folge ($F_k$) zu versetzen.

11. Vorrichtung nach einem der Ansprüche 1 bis 10, **dadurch gekennzeichnet, dass** jede Scaneinheit ($5_k$) umfasst:

   eine Ablenkeinrichtung (14) mit einem um seine Prismenachse ($15_k$) drehbaren Spiegelprisma ($16_k$), dessen Mantelseiten jeweils eine Spiegelfläche ($17_j$) bilden, und
   einen Lasersender ($12_k$) zum Aussenden des jeweiligen Laserstrahls in einer jeweiligen Senderichtung ($\vartheta_k$) auf die Ablenkeinrichtung (14).

12. Vorrichtung nach Anspruch 11, **dadurch gekennzeichnet, dass** der Lasersender ($12_k$) ferner einen im Strahlengang des Laserstrahls ($4_k$) liegenden verstellbaren Umlenkspiegel ($13_k$) aufweist und die Steuereinrichtung (22) dazu ausgebildet ist, die Scanzeilenschar ($10_k$) der genannten zumindest einen weiteren Scaneinheit ($5_k$) durch Verstellen des zugehörigen Umlenkspiegels ($13_k$) zu versetzen.

13. Vorrichtung nach Anspruch 11 oder 12, **dadurch gekennzeichnet, dass** der Lasersender ($12_k$) gegenüber der Ablenkeinrichtung (14) verstellbar gelagert und die Steuereinrichtung (22) dazu ausgebildet ist, die Scanzeilenschar ($10_k$) der genannten zumindest einen weiteren Scaneinheit ($5_k$) durch Steuern der Lage des zugehörigen Lasersenders ($12_k$) zu versetzen.

14. Vorrichtung nach einem der Ansprüche 11 bis 13, **dadurch gekennzeichnet, dass** die Steuereinrichtung (22) dazu ausgebildet ist, die Scanzeilenschar ($10_k$) der genannten zumindest einen weiteren Scaneinheit ($5_k$) durch Steuern der Phasenlage ($\Delta\varphi_{k,k-1}$) der Drehbewegung des zugehörigen Spiegelprismas ($16_k$) zu versetzen.

15. Vorrichtung nach Anspruch 14 in Verbindung mit Anspruch 7, **dadurch gekennzeichnet, dass** die Phasenlage ($\Delta\varphi_{k,k-1}$) zwischen den Drehbewegungen der Spiegelprismen ($16_k$, $16_{k-1}$) je zweier in der Reihung einander benachbarter Scaneinheiten ($5_k$, $5_{k-1}$) gewählt ist als

$$\Delta\varphi_{k,k-1} = \frac{360°}{K \cdot J} - D_{k,k-1} \cdot \frac{360°}{J \cdot v \cdot T_{AP}}$$

mit

   K Anzahl der Scaneinheiten ($5_k$),
   J Anzahl der Spiegelflächen ($17_j$),
   $\Delta\varphi_{k,k-1}$ Phasenlage des Spiegelprismas ($16_k$) der k-ten Scaneinheit ($5_k$) gegenüber dem Spiegelprisma ($16_{k-1}$) der (k-1)-ten Scaneinheit ($5_{k-1}$),
   v Relativgeschwindigkeit,
   $T_{AP}$ Ablenkperiodendauer,
   $D_{k,k-1}$ Distanz zwischen dem k-ten und (k-1)-ten Scanfächer entlang der Bewegungsrichtung und mod .... Modulo-Operator.

**Claims**

1. An apparatus for surveying an environment (2), which is moving relative to the apparatus (1) in a direction of movement (R) at a relative speed (v), by time-of-flight measurement of laser beams (4) reflected from the environment in a coordinate system (11), comprising

   a first scanning unit ($5_1$) for transmitting a first laser beam ($4_1$) over a first series ($F_1$) of deflection periods ($AP_{1,p}$) with a respective deflection period duration ($T_{AP}$), the first laser beam, in each deflection period ($AP_{1,p}$), passing through a first scanning fan ($6_1$) and scanning the environment (2) along a first scan line ($7_{1,p}$) which is non-parallel to the direction of movement (R), wherein the first scan lines $(7_{1,p})$ form a first scan line group $(10_1)$, and for receiving the corresponding laser beam $(4_1)$ reflected from the environment (2),

at least one further scanning unit $(5_k)$ for transmitting a further laser beam $(4_k)$ over a further series $(F_k)$ of deflection periods $(AP_{k,p})$ with the same respective deflection period duration $(T_{AP})$, the further laser beam, in each deflection period $(AP_{k,p})$, passing through a further scanning fan $(6_k)$ and scanning the environment (2) along a further scan line $(7_{k,p})$ non-parallel to the direction of movement (R), wherein the further scan lines $(7_{k,p})$ form a further scan line group $(10_k)$, and for receiving the corresponding laser beam $(4_k)$ reflected from the environment (2),

wherein all scanning fans $(6_k)$, seen in the direction of movement (R), substantially overlap and the grouping directions $(SR_k)$ of all scan line groups $(10_k)$ are substantially parallel as seen from the apparatus (1),

**characterised in that** the apparatus (1) is configured to, by means of the first scanning unit $(5_1)$ and the at least one further scanning unit $(5_i)$, simultaneously transmit two or more scanning fans $(6_1, 6_k)$, and comprises a control device (22) connected to the at least one further scanning unit $(5_k)$ and configured to offset the scan line group $(10_k)$ of each further scanning unit $(5_k)$ with respect to the scan line group $(10_k)$ of a scanning unit $(5_{k-1})$, that is respectively adjacent in a predetermined sequence of the scanning units $(5_k)$, in the direction of movement (R) by a position offset $(\Delta S_{k,k-1})$ which is dependent on the relative speed (v) and the deflection period duration $(T_{AP})$, in such a way that said further scan lines $(7_{k,p})$ do not coincide with said first scan lines $(7_{k,p})$.

2. The apparatus according to claim 1, **characterised in that** it is mounted on a vehicle (3), preferably on an aircraft.

3. Apparatus according to any one of claims 1 or 2, **characterised in that** the control device (22) is configured to predetermine the deflection period duration $(T_{AP})$ and/or the relative speed (v) depending on at least one past distance measurement value $(d_{k,n})$ of the environment (2).

4. The apparatus according to any one of claims 1 to 3, **characterised in that** the control device (22) is configured to offset the scan line group $(10_k)$ of each further scanning unit $(5_k)$ with respect to the scan line group $(10_{k-1})$ of a scanning unit $(5_{k-1})$ that is respectively adjacent in a predetermined sequence of the scanning units $(5_k)$, in such a way that the scan lines $(7_k)$ are arranged at regular intervals $(S_r)$ in the direction of movement (R).

5. The apparatus according to any one of claims 1 to 4, **characterised in that** the position offset $(\Delta S_{k,k-1})$ between the scan line groups $(10_k, 10_{k-1})$ of each two scanning units $(5_k, 5_{k-1})$ adjacent to one another in the sequence, increased by a displacement $(S_{k,k-1})$ between these two scan line groups $(10_k, 10_{k-1})$ in the direction of movement (R) caused by the relative movement without this position offset $(\Delta S_{k,k-1})$, corresponds to the distance (SW) between two successive scan lines $(7_{k,p}, 7_{k,p+1})$ of a scanning unit $(5_k)$ in the direction of movement (R), divided by the number (K) of all scanning units $(5_k)$.

6. The apparatus according to any one of claims 1 to 5, **characterised in that** the position offset $(\Delta S_{k,k-1})$ between the scan line groups $(10_k, 10_{k-1})$ of each two scanning units $(5_k, 5_{k-1})$ adjacent to one another in the sequence is chosen as

$$\Delta S_{k,k-1} = \frac{v \cdot T_{AP}}{K} - \left[ D_{k,k-1} + h \cdot (\tan\alpha_k - \tan\alpha_{k-1}) \right] \mathrm{mod}(v \cdot T_{AP}) \qquad (1)$$

with

K number of scanning units $(5_k)$,
$\Delta S_{k,k-1}$ position offset of the k-th scan line group $(10_k)$ with respect to the (k-1)-th scan line group $(10_{k-1})$,
v relative speed,
$T_{AP}$ deflection period duration,
$D_{k,k-1}$ distance between vertices $(20_k)$ of the k-th and (k-1)-th scanning fans $(6_k, 6_{k-1})$ along the direction of movement (R),
h expected normal distance between apparatus (1) and environment (2),
$\alpha_k$ angle between an expected normal (N) on the environment (2) and the k-th scanning fan $(6_k)$ in a plane (E) spanned by the direction of movement (R) and the expected normal (N), and
mod modulo operator.

7. The apparatus according to any one of claims 1 to 6, **characterised in that** all scanning fans $(6_k)$ are substantially parallel.

8. The apparatus according to claim 7, **characterised in that** the position offset ($\Delta S_{k,k-1}$) between the scan line groups ($10_k$, $10_{k-1}$) of each two scanning units ($5_k$, $5_{k-1}$) adjacent to one another in the sequence is chosen as

$$\Delta S_{k,k-1} = \frac{v \cdot T_{AP}}{K} - D_{k,k-1} \bmod\left(v \cdot T_{AP}\right) \qquad (2)$$

with

K number of scanning units ($5_k$),
$\Delta S_{k,k-1}$ position offset of the k-th scan line group ($10_k$) with respect to the (k-1)-th scan line group ($10_{k-1}$),
v relative speed,
$T_{AP}$ deflection period duration,
$D_{k,k-1}$ distance between the k-th and (k-1)-th scanning fans ($6_k$, $6_{k-1}$) along the direction of movement (R), and
mod modulo operator.

9. The apparatus according to any one of claims 1 to 8, **characterised in that** the control device (22) is configured to offset the scan line group ($10_k$) of said at least one further scanning unit ($5_k$) by controlling optical elements in the beam path of its laser beam ($4_k$).

10. The apparatus according to claim 9, **characterised in that** the control device (22) is configured to offset the scan line group ($10_k$) of said at least one further scanning unit ($5_k$) by controlling a time offset ($\Delta V_{k,k-1}$) of the respective series ($F_k$).

11. The apparatus according to any one of claims 1 to 10, **characterised in that** each scanning unit ($5_k$) comprises:

a deflection device (14) with a mirror prism ($16_k$) rotatable about its prism axis ($15_k$), the lateral sides of which mirror prism each form a mirror face (17j), and
a laser transmitter ($12_k$) for transmitting the respective laser beam in a respective transmission direction ($\vartheta_k$) to the deflection device (14).

12. The apparatus according to claim 11, **characterised in that** the laser transmitter ($12_k$) further comprises an adjustable deflection mirror ($13_k$) arranged in the beam path of the laser beam ($4_k$), and the control device (22) is configured to offset the scan line group ($10_k$) of said at least one further scanning unit ($5_k$) by adjusting the corresponding deflection mirror ($13_k$).

13. The apparatus according to claim 11 or 12, **characterised in that** the laser transmitter ($12_k$) is arranged adjustably relative to the deflection device (14), and the control device (22) is configured to offset the scan line group ($10_k$) of said at least one further scanning unit ($5_k$) by adjusting the arrangement of the corresponding laser transmitter ($12_k$).

14. The apparatus according to any one of claims 11 to 13, **characterised in that** the control device (22) is configured to offset the scan line group ($10_k$) of said at least one further scanning unit ($5_k$) by controlling the phase shift ($\Delta\varphi_{k,k-1}$) of the rotational movement of the corresponding mirror prism ($16_k$).

15. The apparatus according to claim 14 in conjunction with claim 7, **characterised in that** the phase shift ($\Delta\varphi_{k,k-1}$) between the rotational movements of the mirror prisms ($16_k$, $16_{k-1}$) of each two scanning units ($5_k$, $5_{k-1}$) adjacent to one another in the sequence is chosen as

$$\Delta\varphi_{k,k-1} = \frac{360°}{K \cdot J} - D_{k,k-1} \cdot \frac{360°}{J \cdot v \cdot T_{AP}}$$

with

K number of scanning units ($5_k$),
J number of mirror faces ($17_j$),
$\Delta\varphi_{k,k-1}$ phase shift of the mirror prism ($16_k$) of the k-th scanning unit ($5_k$) with respect to the mirror prism ($16_{k-1}$) of the (k-1)-th scanning unit ($5_{k-1}$),

v relative speed,

$T_{AP}$ deflection period duration,

$D_{k,k-1}$ distance between the k-th and (k-1)-th scanning fans along the direction of movement, and

mod modulo operator.

## Revendications

1. Dispositif de mesure d'un environnement (2), qui est en mouvement relatif par rapport au dispositif (1) dans une direction de mouvement (R) à une vitesse relative (v), par la mesure de temps de vol de faisceaux laser (4) réfléchis par l'environnement dans un système de coordonnées (11), comprenant

   une première unité de balayage ($5_1$) pour l'émission d'un premier faisceau laser ($4_1$) sur une première suite ($F_1$) de périodes de déviation ($AP_{1,p}$) avec une durée de période de déviation ($T_{AP}$) respective, le premier faisceau laser parcourant un premier éventail de balayage ($6_1$) dans chaque période de déviation ($AP_{1,p}$) et balayant l'environnement (2) le long d'une première ligne de balayage ($7_{1,p}$) non parallèle à la direction de mouvement (R), dans lequel les premières lignes de balayage ($7_{1,p}$) forment un premier groupe de lignes de balayage ($10_1$), et pour la réception du faisceau laser ($4_1$) correspondant réfléchi par l'environnement (2),
   au moins une autre unité de balayage ($5_k$) pour l'émission d'un autre faisceau laser ($4_k$) sur une autre suite ($F_k$) de périodes de déviation ($AP_{k,p}$) avec la même durée de période de déviation ($T_{AP}$) respective, l'autre faisceau laser parcourant un autre éventail de balayage ($6_k$) dans chaque période de déviation ($AP_{k,p}$) et balayant l'environnement (2) le long d'une autre ligne de balayage ($7_{k,p}$) non parallèle à la direction de mouvement (R), dans lequel les autres lignes de balayage ($7_{k,p}$) forment un autre groupe de lignes de balayage ($10_k$), et pour la réception du faisceau laser ($4_k$) correspondant réfléchi par l'environnement (2),
   dans lequel tous les éventails de balayage ($6_k$), vus dans la direction de mouvement (R), se superposent essentiellement et les directions de groupe ($SR_k$) de tous les groupes de lignes de balayage ($10_k$), vus depuis le dispositif (1), sont essentiellement parallèles,
   **caractérisé en ce que** le dispositif (1) est conçu pour émettre simultanément deux ou plusieurs éventails de balayage ($6_1$, $6_k$) au moyen de la première unité de balayage ($5_1$) et de l'au moins une autre unité de balayage ($5_k$), et présente un dispositif de commande (22) connecté à l'au moins une autre unité de balayage ($5_k$), le dispositif de commande étant conçu pour décaler le groupe de lignes de balayage ($10_k$) de chaque autre unité de balayage ($5_k$) par rapport au groupe de lignes de balayage ($10_k$) d'une unité de balayage ($5_{k-1}$) respectivement voisine dans un ordre prédéterminé des unités de balayage ($5_k$) dans la direction de mouvement (R) d'un décalage de position ($\Delta S_{k,k-1}$) dépendant de la vitesse relative (v) et de la durée de période de déviation ($T_{AP}$) de telle manière que lesdites autres lignes de balayage ($7_{k,p}$) ne coïncident pas avec lesdites premières lignes de balayage ($7_{k,p}$).

2. Dispositif selon la revendication 1, **caractérisé en ce qu'**il est monté sur un véhicule (3), de préférence sur un véhicule aérien.

3. Dispositif selon l'une quelconque des revendications 1 ou 2, **caractérisé en ce que** le dispositif de commande (22) est conçu pour prédéterminer la durée de période de déviation ($T_{AP}$) et/ou la vitesse relative (v) en fonction d'au moins une valeur de mesure de distance ($d_{k,n}$) précédente de l'environnement (2).

4. Dispositif selon l'une quelconque des revendications 1 à 3, **caractérisé en ce que** le dispositif de commande (22) est conçu pour décaler le groupe de lignes de balayage ($10_k$) de chaque autre unité de balayage ($5_k$) par rapport au groupe de lignes de balayage ($10_{k-1}$) d'une unité de balayage ($5_{k-1}$) respectivement voisine dans un ordre prédéterminé des unités de balayage ($5_k$) de telle manière que les lignes de balayage ($7_k$) sont disposées à intervalles réguliers ($S_r$) dans la direction de mouvement (R).

5. Dispositif selon l'une quelconque des revendications 1 à 4, **caractérisé en ce que** le décalage de position ($\Delta S_{k,k-1}$) entre les groupes de lignes de balayage ($10_k$, $10_{k-1}$) de chaque deux unités de balayage ($5_k$, $5_{k-1}$) voisines l'une de l'autre dans l'ordre, augmenté d'un déplacement ($S_{k,k-1}$) situé dans la direction de mouvement (R), provoqué par le mouvement relatif sans ce décalage de position ($\Delta S_{k,k-1}$), entre ces deux groupes de lignes de balayage ($10_k$, $10_{k-1}$), correspond à la distance (SW) située dans la direction de mouvement (R) entre deux lignes de balayage ($7_{k,p}$, $7_{k,p+1}$) successives d'une unité de balayage ($5_k$), divisée par le nombre (K) de toutes les unités de balayage ($5_k$).

6. Dispositif selon l'une quelconque des revendications 1 à 5, **caractérisé en ce que** le décalage de position ($\Delta S_{k,k-1}$) entre les groupes de lignes de balayage ($10_k$, $10_{k-1}$) de chaque deux unités de balayage ($5_k$, $5_{k-1}$) voisines l'une de l'autre dans l'ordre est choisi comme

$$\Delta S_{k,k-1} = \frac{v \cdot T_{AP}}{K} - \left[ D_{k,k-1} + h \cdot (\tan\alpha_k - \tan\alpha_{k-1}) \right] \mathrm{mod}(v \cdot T_{AP})$$

avec

K nombre des unités de balayage ($5_k$),
$\Delta S_{k,k-1}$ décalage de position du k-ième groupe de lignes de balayage ($10_k$) par rapport au (k-1)-ième groupe de lignes de balayage ($10_1$),
v vitesse relative,
$T_{AP}$ durée de période de déviation,
$D_{k,k-1}$ distance entre les sommets ($20_k$) des k-ième et (k-1)-ième éventails de balayage ($6_k$, $6_{k-1}$) le long de la direction de mouvement (R),
h distance normale attendue entre le dispositif (1) et l'environnement (2),
$\alpha_k$ angle d'une normale attendue (N) à l'environnement (2) par rapport au k-ième éventail de balayage ($6_k$) dans un plan (E) défini par la direction de mouvement (R) et la normale attendue (N), et
mod opérateur modulo.

7. Dispositif selon l'une quelconque des revendications 1 à 6, **caractérisé en ce que** tous les éventails de balayage ($6_k$) sont essentiellement parallèles.

8. Dispositif selon la revendication 7, **caractérisé en ce que** le décalage de position ($\Delta S_{k,k-1}$) entre les groupes de lignes de balayage ($10_k$, $10_{k-1}$) de chaque deux unités de balayage ($5_k$, $5_{k-1}$) voisines l'une de l'autre dans l'ordre est choisi comme

$$\Delta S_{k,k-1} = \frac{v \cdot T_{AP}}{K} - D_{k,k-1} \mathrm{mod}(v \cdot T_{AP})$$

avec

K nombre des unités de balayage ($5_k$),
$\Delta S_{k,k-1}$ décalage de position du k-ième groupe de lignes de balayage ($10_k$) par rapport au (k-1)-ième groupe de lignes de balayage ($10_{k-1}$),
v vitesse relative,
$T_{AP}$ durée de période de déviation,
$D_{k,k-1}$ distance entre les k-ième et (k-1)-ième éventails de balayage ($6_k$, $6_{k-1}$) le long de la direction de mouvement (R), et
mod opérateur modulo.

9. Dispositif selon l'une quelconque des revendications 1 à 8, **caractérisé en ce que** le dispositif de commande (22) est conçu pour décaler le groupe de lignes de balayage ($10_k$) de ladite au moins une autre unité de balayage ($5_k$) par la commande d'éléments optiques dans la trajectoire de faisceau de son faisceau laser ($4_k$).

10. Dispositif selon la revendication 9, **caractérisé en ce que** le dispositif de commande (22) est conçu pour décaler le groupe de lignes de balayage ($10_k$) de ladite au moins une autre unité de balayage ($5_k$) par la commande d'un décalage temporel ($\Delta V_{k,k-1}$) de la suite ($F_k$) respective.

11. Dispositif selon l'une quelconque des revendications 1 à 10, **caractérisé en ce que** chaque unité de balayage ($5_k$) comprend :

un dispositif de déviation (14) avec un prisme miroir ($16_k$) pouvant tourner autour de son axe de prisme ($15_k$), dont les côtés d'enveloppe forment respectivement une surface de miroir ($17_j$), et
un émetteur laser ($12_k$) pour l'émission du faisceau laser respectif dans une direction d'émission ($\vartheta_k$) respective sur le dispositif de déviation (14).

**12.** Dispositif selon la revendication 11, **caractérisé en ce que** l'émetteur laser ($12_k$) présente en outre un miroir de déviation ($13_k$) ajustable situé dans la trajectoire de faisceau du faisceau laser ($4_k$) et le dispositif de commande (22) est conçu pour décaler le groupe de lignes de balayage ($10_k$) de ladite au moins une autre unité de balayage ($5_k$) par l'ajustement du miroir de déviation ($13_k$) correspondant.

**13.** Dispositif selon la revendication 11 ou 12, **caractérisé en ce que** l'émetteur laser ($12_k$) est monté de manière ajustable par rapport au dispositif de déviation (14) et le dispositif de commande (22) est conçu pour décaler le groupe de lignes de balayage ($10_k$) de ladite au moins une autre unité de balayage ($5_k$) par l'ajustement de la monté de l'émetteur laser ($12_k$) correspondant.

**14.** Dispositif selon l'une quelconque des revendications 11 à 13, **caractérisé en ce que** le dispositif de commande (22) est conçu pour décaler le groupe de lignes de balayage ($10_k$) de ladite au moins une autre unité de balayage ($5_k$) par la commande de la position de phase ($\Delta\varphi_{k,k-1}$) du mouvement rotatif du prisme miroir ($16_k$) correspondant.

**15.** Dispositif selon la revendication 14 en liaison avec la revendication 7, **caractérisé en ce que** la position de phase ($\Delta\varphi_{k,k-1}$) entre les mouvements rotatifs des prismes miroirs ($16_k$, $16_{k-1}$) de chaque deux unités de balayage ($5_k$, $5_{k-1}$) voisines l'une de l'autre dans l'ordre est choisie comme

$$\Delta\varphi_{k,k-1} = \frac{360°}{K \cdot J} - D_{k,k-1} \cdot \frac{360°}{J \cdot v \cdot T_{AP}}$$

avec

K nombre des unités de balayage ($5_k$),
J nombre des surfaces de miroir ($17_j$),
$\Delta\varphi_{k,k-1}$ position de phase du prisme miroir ($16_k$) de la k-ième unité de balayage ($5_k$) par rapport au prisme miroir ($16_{k-1}$) de la (k-1)-ième unité de balayage ($5_{k-1}$),
v vitesse relative,
$T_{AP}$ durée de période de déviation,
$D_{k,k-1}$ distance entre les k-ième et (k-1)-ième éventails de balayage le long de la direction de mouvement, et
mod opérateur modulo.

*Fig. 1*

*Fig. 2*

*Fig. 3a*

*Fig. 3c*

*Fig. 3b*

**Fig. 4**

**Fig. 5**

**Fig. 6**

**Fig. 7**

*Fig. 8*

*Fig. 9*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3182159 B1

- DE 102004050682 A1